(19) Europäisches Patentamt
European Patent Office
Office européen des brevets

(11) **EP 3 806 192 A1**

(12) **EUROPEAN PATENT APPLICATION**
published in accordance with Art. 153(4) EPC

(43) Date of publication:
**14.04.2021 Bulletin 2021/15**

(51) Int Cl.:
*H01M 2/16* [(2006.01)]    *H01G 11/52* [(2013.01)]

(21) Application number: **19814663.1**

(22) Date of filing: **26.04.2019**

(86) International application number:
**PCT/JP2019/018141**

(87) International publication number:
**WO 2019/235112 (12.12.2019 Gazette 2019/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2018 JP 2018110467**

(71) Applicant: **Asahi Kasei Kabushiki Kaisha Tokyo 1000006 (JP)**

(72) Inventors:
• **HATAYAMA, Hiroshi**
  **Tokyo 100-0006 (JP)**
• **HORIIKE, Noriko**
  **Tokyo 100-0006 (JP)**
• **MURAKAMI, Masato**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **MULTILAYER SEPARATOR**

(57)     In an exchange NMR measurement of a fluoride ion of an electrical storage device multilayer separator that comprises porous layer A which contains a polyolefin resin and porous layer B which contains inorganic particles, r(AB) satisfies the relationship: $r(AB) \geq 45$ , where r(AB) is the ion transmission rate (%) between porous layer A and porous layer B in a mixing time of 100 ms.

# FIG. 1

POROUS LAYER B

POROUS LAYER A

**Description**

FIELD

The present invention relates to a multilayer separator used for an electricity storage device (hereinafter, sometimes simply referred to as "battery") and further relates to a battery, etc. using the same.

BACKGROUND

Conventionally, in an electricity storage device, an electrolytic solution is impregnated into a power generation element where a separator is sandwiched between a positive electrode plate and a negative electrode plate. In general, ion permeability and safety such as shutdown function are required of the separator and therefore, a separator including a porous layer containing a polyolefin resin is used. Furthermore, from the viewpoint of electric insulation in the event of thermal runaway, heat resistance, cycle characteristics, etc., a multilayer separator in which a resin porous layer, an inorganic filler, and a porous layer containing a binder therefor are stacked is also being studied (Patent Literatures 1 to 4).

In Patent Literature 1, it is stated that when the lithium (Li) ion diffusion coefficient of the polyolefin resin porous membrane constituting one layer out of a multilayer separator is in a specific range, the cycle characteristics or trickle characteristics are good. Patent Literature 1 does not refer to the ion diffusion coefficient of a layer other than the polyolefin resin porous membrane in the multilayer separator or the ion diffusibility at the interface of the multilayer separator.

In Patent Literature 2, attempts are made to enhance the device output characteristics by adjusting the porosity of a heat-resistant fine particle-containing layer out of the multilayer separator to 55% or more, but there is room for improvement and in addition, increasing the porosity poses a concern about storage characteristics and reliability such as lithium dendrite resistance, etc.

In Patent Literature 3, attempts are made to enhance the output characteristics by reducing the proportion of the binder in the heat-resistant porous layer to 7 vol% or less, but the lower limit value of the binder proportion is unclear and in addition, there is concern about short circuit or deterioration of the cycle characteristics due to reduction in the binding capacity.

Patent Literature 4 describes a film formed by stacking a heat-resistant layer containing a binder resin and a filler on a surface of a polyolefin porous film, in which the ion permeability is controlled by controlling the proportion of the binder resin penetrating the inside of the polyolefin porous film. However, it is unclear how the ion permeability at the interface between the film and the heat-resistance layer specifically affects the output characteristics.

[CITATION LIST]

[PATENT LITERATURE]

[PTL 1] Japanese Unexamined Patent Publication (Kokai) No. 2016-76337
[PTL 2] Kokai No. 2011-100602
[PTL 3] International Publication WO2012/005152
[PTL 4] Kokai No. 2013-46998

SUMMARY

[TECHNICAL PROBLEM]

In recent years, attention is focused on utilizing regenerated energy and therefore, high-rate cycle characteristics of an electricity storage device equipped with a multilayer separator are demanded. The high-rate cycle characteristics are evaluated under severer conditions than the conventional output characteristics. In conventional multilayer separators, the ion permeability is adjusted, for example, by controlling the structure of a resin porous layer or an inorganic porous layer or controlling the air permeability of the separator as a whole, but with respect to the high-rate cycle characteristics, studies have not been made or there is room for improvement.

Accordingly, an object of the present invention is to provide a multilayer separator for an electricity storage device having excellent high-rate cycle characteristics.

[SOLUTION TO PROBLEM]

The problem above is solved by the following technical means.

[1] A multilayer separator for an electricity storage device, including a porous layer A containing a polyolefin resin and a porous layer B containing an inorganic particle, wherein
in the fluoride ion exchange NMR measurement of the multilayer separator for an electricity storage device, denoting as r(AB) the ion permeation rate (%) between the porous layer A and the porous layer B with a mixing time of 100 ms, the r(AB) satisfies the following relational expression:

$$r(AB) \geq 45 \quad .$$

[2] The multilayer separator for an electricity storage device according to item 1, wherein the r(AB) satisfies the following relational expression:

$$r(AB) > 50 \quad .$$

[3] The multilayer separator for an electricity storage device according to item 1 or 2, wherein the primary particle diameter of the inorganic particle is 50 nm or more and 3 $\mu$m or less.
[4] The multilayer separator for an electricity storage device according to any one of items 1 to 3, wherein the degree of surface hydrophilicity of the inorganic particle is 0.30 or more and 0.80 or less.
[5] The multilayer separator for an electricity storage device according to any one of items 1 to 4, wherein the porous layer B contains 70 weight% or more and 100 weight% or less of the inorganic particle.
[6] The multilayer separator for an electricity storage device according to any one of items 1 to 5, wherein the multilayer separator for an electricity storage device satisfies the following relational expression:

$$\text{total thickness of porous layer A} < \text{total thickness of porous layer B.}$$

[7] The multilayer separator for an electricity storage device according to any one of items 1 to 6, wherein in the pulsed field gradient NMR measurement for fluoride ion of the multilayer separator for an electricity storage device, denoting as D(B) the ion diffusion coefficient of the porous layer B, D(B) satisfies the following relational expression:

$$D(B) > 1.0 \times 10^{-10} \quad .$$

[8] The multilayer separator for an electricity storage device according to any one of items 1 to 7, wherein in the pulsed field gradient NMR measurement for fluoride ion of the multilayer separator for an electricity storage device, denoting as D(A) the ion diffusion coefficient of the porous layer A, D(A) satisfies the following relational expression:

$$D(A) < 1.0 \times 10^{-10} \quad .$$

[9] The multilayer separator for an electricity storage device according to any one of items 1 to 8, wherein the porous layer A and the porous layer B have a peel strength of 20 N/m or more and 1,000 N/m or less.
[10] The multilayer separator for an electricity storage device according to any one of items 1 to 9, wherein the porous layer A and the porous layer B are coextruded.
[11] The multilayer separator for an electricity storage device according to item 10, wherein the multilayer separator for an electricity storage device is obtained by stacking the porous layer A and the porous layer B each in a non-porous state in the presence of a liquid and then making the stack porous.
[12] The multilayer separator for an electricity storage device according to any one of items 1 to 9, wherein the porous layer B does not contain a binder component.
[13] The multilayer separator for an electricity storage device according to any one of items 1 to 9, wherein the surface of the inorganic particle is bonded to a polymer or a dispersant.

[14] The multilayer separator for an electricity storage device according to any one of items 1 to 13, wherein the r(AB) satisfies the following relational expression:

$$r(AB) \leq 100 \quad .$$

[15] The multilayer separator for an electricity storage device according to any one of items 1 to 14, wherein the D(B) satisfies the following relational expression:

$$D(B) \leq 1.0 \times 10^{-9} \quad .$$

[16] The multilayer separator for an electricity storage device according to any one of items 1 to 15, wherein the D(A) satisfies the following relational expression:

$$D(A) \geq 1.0 \times 10^{-11} \quad .$$

[17] The multilayer separator for an electricity storage device according to any one of items 1 to 16, wherein in the fluoride ion exchange NMR measurement of the multilayer separator for an electricity storage device, when the value S calculated according to the following formula is defined as the ion permeability index S(AB):

$$S \,(\%/ms) = \{(ion\ permeation\ rate\ r(AB)\ with\ 100\ ms\ mixing\ time) - (ion\ permeation\ rate\ r(AB)\ with\ 20\ ms\ mixing\ time)\}/(100-20)$$

the S(AB) satisfies the following relational expression:

$$S(AB) > 0.25 \quad .$$

[18] The multilayer separator for an electricity storage device according to item 17, wherein S(AB) satisfies the following relational expression:

$$S(AB) > 0.35 \quad .$$

[19] The multilayer separator for an electricity storage device according to item 17 or 18, wherein S(AB) satisfies the following relational expression:

$$S(AB) \leq 1.00 \quad .$$

[20] A multilayer separator for an electricity storage device, including a porous layer A containing a polyolefin resin and a porous layer B containing an inorganic particle, wherein
in the fluoride ion exchange NMR measurement of the multilayer separator for an electricity storage device, when the value S calculated according to the following formula is defined as the ion permeability index S(AB):

$$S \,(\%/ms) = \{(ion\ permeation\ rate\ r(AB)\ with\ 100\ ms\ mixing\ time) - (ion\ permeation\ rate\ r(AB)\ with\ 20\ ms\ mixing\ time)\}/(100-20)$$

the S(AB) satisfies the following relational expression:

$$S(AB) > 0.25 \quad .$$

[21] The multilayer separator for an electricity storage device according to item 20, wherein S(AB) satisfies the following relational expression:

$$S(AB) > 0.35 \quad .$$

[22] The multilayer separator for an electricity storage device according to item 20 or 21, wherein S(AB) satisfies the following relational expression:

$$S(AB) \leq 1.00 \quad .$$

[ADVANTAGEOUS EFFECTS OF INVENTION]

According to the present invention, a multilayer separator for an electricity storage device having excellent high-rate cycle characteristics, and an electricity storage device using the same can be provided.

BRIEF DESCRIPTION OF DRAWINGS

[Fig. 1] Fig. 1 is a schematic diagram for explaining the ion diffusion behavior in a multilayer separator for an electricity storage device, including a porous layer A containing a polyolefin resin and a porous layer B containing an inorganic particle.
[Fig. 2] Fig. 2 is one example of the fluoride ion exchange NMR spectrum in the multilayer separator for an electricity storage device illustrated in Fig. 1, Fig. 2(a) shows a spectrum when the mixing time is 100 ms, and Fig. 2(b) shows a spectrum when the mixing time is 20 ms.
[Fig. 3] Fig. 3 is a slice data at a peak maximum of the porous layer A illustrated in Fig. 2(a) and shows a way to determine the areas of diagonal peak and cross peak.

DESCRIPTION OF EMBODIMENTS

The embodiment of the present invention (hereinafter referred to as "present embodiment") is described in detail below, but the present invention is not limited to the present embodiment. In the present description, the upper limit value and the lower limit value in each numerical range can be combined arbitrarily.

<Multilayer Separator>

The multilayer separator according to the present embodiment includes a porous layer A containing a polyolefin resin and a porous layer B containing an inorganic particle.

[Inter-Multilayer Ion Permeation Rate or Inter-Multilayer Ion Permeability Index]

In the multilayer separator according to a first embodiment, in the fluoride ion exchange NMR measurement thereof, denoting as r(AB) the ion permeation rate (%) between the porous layer A and the porous layer B with a mixing time of 100 ms, r(AB) satisfies the following relational expression:

$$r(AB) \geq 45$$

When r(AB) is 45 or more, blockage of ion permeation between the porous layer A and the porous layer B is inhibited, and an electricity storage device equipped with the multilayer separator tends to exhibit excellent high-rate cycle characteristics. In view of high-rate cycle characteristics, r(AB) is preferably more than 50, more preferably 60 or more, 70 or more, or 80 or more. The upper limit value of r(AB) may be theoretically 100 (%) and may be, for example, 99 or less, 98 or less, or 97 or less.
Incidentally, the fluoride ion exchange NMR measurement of the multilayer separator is described in detail in the paragraph of EXAMPLES.

In the multilayer separator according to a second embodiment, in the fluoride ion exchange NMR measurement thereof, when the value S calculated according to the following formula is defined as the ion permeability index S(AB):

$$S\ (\%/ms) = \{(\text{ion permeation rate r(AB) with 100 ms mixing time}) - (\text{ion permeation rate r(AB) with 20 ms mixing time})\}/(100-20)$$

the S(AB) satisfies the following relational expression:

$$S(AB) > 0.25$$

If S(AB) exceeds 0.25, blockage of ion permeation between the porous layer A and the porous layer B is inhibited, and an electricity storage device equipped with the multilayer separator tends to exhibit excellent high-rate cycle characteristics. In view of high-rate cycle characteristics, S(AB) is preferably more than 0.35, more preferably 0.40 or more, still more preferably 0.46 or more or 0.50 or more, yet still more preferably 0.55 or more, 0.60 or more, or 0.64 or more. The upper limit value of S(AB) can be determined according to the sensitivity or detection limit of the fluoride ion exchange NMR measurement with mixing times of 100 ms and 20 ms and, for example, may be 1.00 or less, 0.95 or less, or 0.90 or less..

In the multilayer separator according to a third embodiment, in the exchange $^{19}$F-NMR measurement thereof, r(AB) and S(AB) satisfy the following relational expressions:

$$r(AB) \geq 45$$

$$S(AB) > 0.25$$

The constituent elements of the multilayer separator, which are common to the first, second and third embodiments, are described below.

[Ion Diffusion Coefficient of Each Layer]

In the pulsed field gradient NMR measurement for fluoride ion of the multilayer separator for an electricity storage device, denoting as D(A) the ion diffusion coefficient of the porous layer A and as D(B) the ion diffusion coefficient of the porous layer B, preferably, D(A) satisfies the following relational expression:

$$D(A) < 1 \times 10^{-10}$$

and D(B) satisfies the following relational expression:

$$D(B) > 1 \times 10^{-10}$$

When D(A) and/or D(B) satisfy the relational expression above, ions can be more fully diffused in the porous layer B containing an inorganic particle while maintaining the ion diffusion in the porous layer A containing a polyolefin resin at a level equal to or greater than the conventional one, and therefore, the device tends to be more excellent in the high-rate cycle characteristics. From the same viewpoint, D(A) is more preferably $3.2 \times 10^{-11}$ or less, or $2.8 \times 10^{-11}$ or less, and D(B) is more preferably $1.2 \times 10^{-10}$ or more, or $1.8 \times 10^{-10}$ or more.

In view of practicability or ion permeability of the separator for an electricity storage device, the lower limit value of D(A) is preferably $1.0 \times 10^{-11}$ or more, or $1.2 \times 10^{-11}$ or more.

Although higher is better, in order to provide a structure enabling the separator to have strength applicable for high-rate cycle, D(B) may be $1.0 \times 10^{-9}$ or less.

Incidentally, the pulsed field gradient NMR measurement of the multilayer separator is described in detail in the paragraph of EXAMPLES.

[Laminated Structure]

From the viewpoint of controlling r(AB), S(AB), D(A) and D(B) to fall within the numerical ranges represented by the relational expressions above and enhancing the ion permeability, ion diffusibility, high-rate cycle characteristics, etc., it is preferred that an interlayer interface visible when observed two-dimensionally or three-dimensionally is not present between the porous layer A and the porous layer B. In the present description, the "interlayer interface is not present" is not intended to preclude the presence of an inter-substance interface between the polyolefin resin and the inorganic particle. For example, when a precursor of the porous layer A and a precursor of the porous layer B are coextruded to provide a multilayer configuration and a multilayer porous layer is formed through the subsequent stretching and/or extrusion and/or drying, etc., the multilayer separator is substantially free of an interlayer interface, and an ion diffusion barrier is advantageously eliminated. More preferably, at the time of coextrusion, the polyolefin resin for the formation of the porous layer A is used also in the inorganic particle-containing composition for the formation of the porous layer B.

In the present embodiment, the multilayer separator may have any of the following layered structures:

porous layer A/porous layer B
porous layer B/porous layer A/porous layer B
porous layer A/porous layer B/porous layer A

and/or may contain a repetition of any one of these layered structures. In the layered structures above, the symbol "/" is used for the convenience of the description but does not necessarily mean an interlayer interface.

[Porous Layer A]

The porous layer A is a layer containing a polyolefin resin. The polyolefin resin preferably accounts for 50 weight% or more and 100 weight% or less of the porous layer A. The proportion of the polyolefin resin in the porous layer A is more preferably 60 weight% or more and 100 weight% or less, still more preferably 70 weight% or more and 100 weight% or less.

The viscosity average molecular weight of the polyolefin used in the resin is, in view of molding processability, preferably 1,000 or more, more preferably 2,000 or more, still more preferably 5,000 or more, and the upper limit is preferably less than 12,000,000, preferably less than 2,000,000, more preferably less than 1,000,000.

The polyolefin resin is not particularly limited includes, for example, a homopolymer, a copolymer and a multistage polymer, which are obtained using, as a monomer, ethylene, propylene, 1-butene, 4-methyl-1-pentene, 1-hexene and 1-octene, etc. In addition, one of these polyolefin resins may be used alone, or two or more thereof may be mixed and used.

Among others, in view of shutdown characteristics of the separator for an electricity storage device, a polyethylene, a polypropylene, a copolymer thereof, and a mixture of these are preferred.

Specific examples of the polyethylene include a low-density polyethylene, a linear low-density polyethylene, a medium-density polyethylene, a high-density polyethylene, an ultrahigh molecular weight polyethylene, etc.

Specific examples of the polypropylene include an isotactic polypropylene, a syndiotactic polypropylene, an atactic polypropylene, etc.

Specific examples of the copolymer include an ethylene-propylene random copolymer, an ethylene propylene rubber, etc.

The porous layer A may contain any additive. The additive includes a polymer other than a polyolefin resin, such as a fluorine-containing resin, a fluorine-containing rubber, other rubbers, a polyimide and its precursor; an inorganic filler; an antioxidant; metal soaps; an ultraviolet absorber; a light stabilizer; an antistatic agent; an antifogging agent; and a color pigment, etc. The total addition amount of these additives is, per 100 parts by weight of the polyolefin resin, preferably 20 parts by weight or less from the viewpoint of enhancing the shutdown performance, and more preferably 10 parts by weight or less, still more preferably 5 parts by weight or less.

[Porous Layer B]

The porous layer B is a layer containing an inorganic particle. The inorganic particle preferably accounts for 50 weight% or more and 100 weight% or less of the porous layer B. The proportion of the inorganic particle in the porous layer B is more preferably 60 weight% or more and 100 weight% or less, still more preferably 70 weight% or more and 100 weight% or less.

The primary particle diameter of the inorganic particle is preferably 50 nm or more and 3 $\mu$m or less, more preferably 90 nm or more and 3 $\mu$m or less, still more preferably 90 nm or more and 2.4 $\mu$m or less. In the present description, the term "primary particle diameter" means a particle diameter measured when the measurement target is in the primary particle state, or in the case of an aggregate state where primary particles are aggregated, a particle diameter measured by the method described later in the paragraph of EXAMPLES. When the primary particle diameter is 50 nm or more or 3 $\mu$m or less, this is advantageous in that the ion permeation rate and ion permeability index are likely to readily increase or the ion diffusion coefficient of the porous layer B is likely to readily increase. The reason therefor is unknown but is considered because when the primary particle diameter of the inorganic particle contained in the porous layer B is 50 nm or more at the interface between the porous layer A and the porous layer B, the porous part of the porous layer A is less likely to be clogged and ions can easily move from the porous part of the porous layer A to the porous part of the polymer B. In addition, the reason why the range above is preferred is considered because when the primary particle diameter of the inorganic particle is 3 $\mu$m or less, the porous part near the interface of the porous layer B can be effectively utilized and can hardly act as a barrier to movement of ions from the porous part of the porous layer A to the porous part of the porous layer B. Furthermore, when the content of the inorganic particle in the porous layer B is 70 weight% or more and the primary particle diameter of the inorganic particle is 90 nm or more and 3 $\mu$m, the gap between particles has appropriate pore diameter, porosity and curve ratio, and this structure tends to facilitate an increase in the ion permeation rate, the ion permeability index, and the ion diffusion coefficient of the porous layer B.

The degree of surface hydrophilicity of the inorganic particle is, from the viewpoint of enhancing the high-rate cycle characteristics, preferably 0.30 or more and 0.80 or less, more preferably 0.40 or more and 0.78 or less, still more preferably 0.52 or more and 0.74 or less. When the degree of surface hydrophilicity is 0.30 or more, the ion permeation rate and the ion permeability index are advantageously apt to easily increase. Although not bound by theory, the reason therefor is considered because when the degree of surface hydrophilicity is 0.30 or more, the affinity for the electrolytic solution is increased and the ion conductivity at the interface between the porous layer A and the porous layer B is enhanced. In addition, when the degree of surface hydrophilicity is 0.80 or less, a side reaction with the electrolytic solution is inhibited, and the cycle or storage characteristics tend to be excellent. The degree of surface hydrophilicity of the inorganic particle can be calculated, for example, according to the following formula:

$$\text{Degree of surface hydrophilicity} = \text{surface area determined by water vapor}$$
$$\text{adsorption/surface area determined by nitrogen adsorption}$$

Incidentally, the measurement of the degree of surface hydrophilicity is described in detail in the paragraph of EXAMPLES.

The inorganic particle includes, for example, oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, barium sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. One of these inorganic particles may be used alone, or a plurality thereof may be used in combination.

The porous layer B preferably has a configuration where a binder resin for binding inorganic particles together is not contained, the surface of the inorganic particle is covered with a polymer or a dispersant, or the surface of the inorganic particle is bonded to a polymer or a dispersant. From the viewpoint of preventing a binder resin originated in the porous layer B from clogging the porous layer A, it is preferable to reduce as much as possible the amount of a binder component present without being involved in the bonding to or the interaction with the inorganic particle in the polymer B.

For example, by performing graft reaction such as living radical polymerization in the state of the inorganic particle being coated with a polymer or a dispersant or the inorganic particle being present together with a polymer or a dispersant, an inorganic particle having a coated or modified surface can be formed.

In addition, when a dispersant having a cloud point of 40°C or more at the concentration at the time of addition has been added to the inorganic particle-containing slurry, fusion between dispersants occurs during drying of the slurry coating film, and a porous layer B in which the dispersant is bonded to the surface of the inorganic particle can be formed.

The binder resin or polymer as used herein includes 1) a conjugated diene-based polymer, 2) an acrylic polymer, 3) a polyvinyl alcohol-based resin, and 4) a fluorine-containing resin.

1) The conjugated diene-based polymer is a polymer containing a conjugated diene compound as a monomer unit. The conjugated diene compound includes, for example, 1,3-butadiene, 2-methyl-1,3-pentadiene, 2,3-dimethyl-1,3-butadiene, 2-chloro-1,3-butadiene, styrene-butadiene, substituted linear conjugated pentadienes, and substituted and side-chain conjugated hexadienes. One of these may be used alone, or two or more thereof may be used in combination. Among others, 1,3-butadiene is preferred.

2) The acrylic polymer is a polymer containing a (meth)acrylic compound as a monomer unit. The (meth)acrylic compound indicates at least one member selected from the group consisting of a (meth)acrylic acid and a (meth)acrylic acid ester.

Such a compound includes, for example, a compound represented by the following formula (P1):

$$CH_2=CR^{Y1}\text{-}COO\text{-}R^{Y2} \qquad (P1)$$

{wherein $R^{Y1}$ represents a hydrogen atom or a methyl group, and $R^{Y2}$ represents a hydrogen atom or a monovalent hydrocarbon group.}

In the case where $R^{Y2}$ is a monovalent hydrocarbon group, the group may have a substituent and/or may have a heteroatom in the chain. The monovalent hydrocarbon group includes, for example, a linear or branched chain alkyl group, a cycloalkyl group, and an aryl group.

The chain alkyl group as one type of $R^{Y2}$ includes, more specifically, a chain alkyl having from 1 to 3 carbon atoms, such as methyl group, ethyl group, n-propyl group and isopropyl group; and a chain alkyl group having 4 or more carbon atoms, such as n-butyl group, isobutyl group, tert-butyl group, n-hexyl group, 2-ethylhexyl group and lauryl group. The aryl group as one type of $R^{Y2}$ includes, for example, a phenyl group.

The substituent on the monovalent hydrocarbon group includes, for example, a hydroxyl group and a phenyl group, and the heteroatom in the chain includes, for example, a halogen atom and an oxygen atom.

The (meth)acrylic compound includes a (meth)acrylic acid, a chain alkyl (meth)acrylate, a cycloalkyl (meth)acrylate, a hydroxyl group-containing (meth)acrylate, a phenyl group-containing (meth)acrylate, etc. As the (meth)acrylic compound, one compound is used alone, or two or more compounds are used in combination.

3) The polyvinyl alcohol-based resin includes, for example, polyvinyl alcohol and polyvinyl acetate.

4) The fluorine-containing resin includes, for example, polyvinylidene fluoride, polytetrafluoroethylene, a vinylidene fluoride-hexafluoropropylene copolymer, a vinylidene fluoride-hexafluoropropylene-tetrafluoroethylene copolymer, and an ethylene-tetrafluoroethylene copolymer.

The dispersant as used herein is a compound that adsorbs to the inorganic particle surface in a slurry and stabilizes the inorganic particle due to electrostatic repulsion, etc., and examples thereof include a polycarboxylate, a sulfonate, a polyoxyether, and a surfactant.

The porous layer B may have a structure where inorganic particles are highly dispersed in a porous membrane composed of a resin. For example, the porous layer B can be produced by heating and mixing inorganic particles and a thermoplastic resin and extruding the mixture into a sheet form. If desired, a plasticizer may be used together at the time of heating and mixing. After extruding inorganic particles and a resin into a sheet form, if desired, steps of stretching, solvent cleaning, plasticizer extraction etc., can be combined. The inorganic particle can be appropriately surface-treated for the purpose of dispersing or high filling in the resin.

<Production Method and Physical Properties of Multilayer Separator>

The multilayer separator according to the present embodiment can be produced, for example, by the following method I or II.

[Method I]

The method I includes the following steps:

(Ia) a step of coextruding a composition A containing a polyolefin resin and a plasticizer and a composition B containing a resin, a plasticizer and an inorganic particle to achieve multilayering;

(Ib) a step of stretching and fibrillating the resulting multilayered product; and (Ic) a step of extracting the plasticizer from the resulting fibrillated product to form pores.

According to the method I, before the step Ic, a layer derived from the composition A and a layer derived from the composition B are fused in the course of coextrusion and through the subsequent fibrillation, a three-dimensional network structure is formed. Accordingly, the plasticizer can pass both layers during the step Ic, and a multilayer separator absent from an interlayer interface as an ion diffusion barrier is likely to be obtained.

In the method I, the polyolefin resin or plasticizer used may be common between the compositions A and B, or different resins or plasticizers may be used. From the viewpoint of reducing the ion diffusion barrier between layers, the plasticizer preferably plasticizes both the polyolefin resin used in the composition A and the resin used in the composition B, the resin used in the composition B is preferably a polyolefin resin, and/or the same plasticizer is preferably used in the compositions A and B. Furthermore, the inorganic particle may be surface-treated in advance.

The compositions A and B may be separately melted and kneaded before the step Ia or may be melted and kneaded together in the step Ia.

[Method II]

The method II includes the following steps:

> (IIa) a step of melt-kneading and extruding a composition A containing a polyolefin resin and a plasticizer, followed by stretching and plasticizer extraction to form a polyolefin resin film as the porous layer A; and
> (IIb) a step of forming the porous layer B on the porous layer A.

In the method II, after the porous layer A is formed, the porous layer B is formed on the porous layer A, so that a multilayer separator having r(AB) of 45 or more and/or S(AB) of more than 0.25 can be obtained. The step IIb can be carried out by any method, for example, a composition C containing inorganic particles may be applied onto the porous layer A to form the porous layer B, or the porous layer B previously prepared on a temporary support may be transferred onto the porous layer A.

Furthermore, the porous layer A and the porous layer B may contain a solvent, etc. and thereby be configured to have no vacancies filled with a gas, and consequently, the step IIb can be carried out by stacking the porous layer A and the porous layer B each in a non-porous state to form a stack. In the present description, the non-porous state of the porous layer indicates the state where the pores of the porous layer are filled with a liquid. After the step IIb, the solvent can be evaporated from the multilayered product.

In order to obtain a multilayer separator having r(AB) of 45 or more and/or S(AB) of more than 0.25, it is preferred for the inorganic particle used in the step IIb to be previously surface-coated with a dispersant or have a surface bonded to a dispersant.

In order to obtain a multilayer separator having r(AB) of 45 or more and/or S(AB) of more than 0.25, the composition C of the step IIb containing a dispersant and a solvent in addition to the inorganic particle is preferably free of a resin binder. More preferably, the composition C contains a dispersant at a relatively high concentration, and still more preferably, a dispersant having a cloud point of 40°C or more at the concentration at the time of addition is added to the composition C.

The step IIb can be carried out, for example, by a gravure coater method, a small-diameter gravure coater method, a reverse roll coater method, a transfer roll coater method, a kiss coater method, a dip coater method, a knife coater method, an air doctor coater method, a blade coater method, a rod coater method, a squeeze coater method, a cast coater method, a die coater method, a screen printing method, a spray coating method, etc. The composition C can be applied to one surface or both surfaces of the porous layer A according to the usage.

The polyolefin resin, inorganic particle and dispersant used in the method I or II are as described above. The additive that can be contained in the composition A is as described above. The plasticizer used in the method I or II is, for example, liquid paraffin, etc. The solvent usable in the method I or II can impart uniform and stable solubility or dispersibility to the composition and includes, for example, N-methylpyrrolidone, N,N-dimethylformamide, N,N-dimethylacetamide, water, ethanol, toluene, hot xylene, hexane, etc.

Both the compositions B and C can contain, if desired, an additive other than the components described above. The additive includes, for example, a thickener, a wetting agent, a defoaming agent, and a pH adjusting agent containing an acid or an alkali. These additives are preferably an additive that can be removed at the time of solvent removal or plasticizer extraction, but as long as they are electrochemically stable in use of the electricity storage device, do not inhibit the battery reaction and are stable up to about 200°C, the additives may remain within the electricity storage device (or in the separator within the electricity storage device). More preferably, as with the above-described dispersant, the additive can cover the inorganic particle surface or can be bonded to the inorganic particle surface.

The method for melt-kneading the composition A includes, for example, a method where the polyolefin resin and, if desired, other additives are charged into a resin kneading device such as extruder, kneader, laboplastomill, kneading roll, Banbury mixer, etc. and the plasticizer is introduced and kneaded at any ratio while heat-melting the resin components. On this occasion, before the polyolefin resin, other additives and plasticizer are charged into the resin kneading device, they are preferably pre-kneaded at a predetermined ratio in advance by using a Henschel mixer, etc. When such a kneading method is used, it is likely that the dispersibility of the plasticizer is increased and at the time of stretching, in a later step, a sheet-shaped molded body of the melt-kneaded product of the resin composition and the plasticizer, the sheet can be stretched at a high ratio without causing membrane breakage.

The method for preparing an inorganic particle-containing slurry of the composition B or C includes, for example, a mechanical stirring method using a ball mill, a bead mill, a planetary ball mill, a vibratory ball mill, a sand mill, a colloidal mill, an attritor, a roll mill, a high-speed impeller dispersion, a disperser, a homogenizer, a high-speed impact mill, an ultrasonic dispersion, a stirring blade, etc.

In the multilayer separator, the peel strength of the porous layer A and the porous layer B is, in view of ion permeability between the layers A and B, preferably 20 N/m or more, more preferably 50 N/m or more, still more preferably 100 N/m or more. The peel strength of the porous layer A and the porous layer B is preferably higher in view of heat resistance, shape stability, etc. but may be 1,000 N/m or less, or 800 N/m or less, according to the productivity.

The puncture strength of the multilayer separator is preferably 100 gf or more, more preferably 150 gf or more, still more preferably 200 gf or more, and is preferably 600 gf or less, more preferably 550 gf or less, still more preferably 500 gf or less. The puncture strength is preferably adjusted to 100 gf or more from the viewpoint of inhibiting membrane breakage due to an active material, etc. shed at the time of manufacture of the electricity storage device, and the range above is also favorable from the viewpoint of reducing concern about short circuiting due to electrode expansion/contraction associated with charge-discharge. On the other hand, the puncture strength is preferably adjusted to 600 gf or less from the viewpoint of reducing contraction due to orientation relaxation at the time of heating.

The final film thickness (total thickness) of the multilayer separator is, from the viewpoint of balancing the mechanical strength and the high rate, preferably 2 $\mu$m or more and 200 $\mu$m or less, more preferably 5 $\mu$m or more and 100 $\mu$m or less, still more preferably 7 $\mu$m or more and 30 $\mu$m or less. When the film thickness is 2 $\mu$m or more, the mechanical strength tends to be sufficient, and when it is 200 $\mu$m or less, the occupied volume of the separator decreases and this tends to be advantageous in increasing the battery capacity.

The final thickness of the porous layer B containing inorganic particles (hereinafter, referred to as the total thickness of the porous layer B; in the case of having a plurality of porous layers B, the final thickness indicates the total of the thicknesses of the layers) is, in view of heat resistance or insulation, preferably 1.0 $\mu$m or more, more preferably 1.2 $\mu$m or more, still more preferably 1.5 $\mu$m or more, 1.8 $\mu$m or more, or 2.0 $\mu$m or more, and from the viewpoint of enhancing the ion permeability and high-rate cycle characteristic, is preferably 50 $\mu$m or less, more preferably 20 $\mu$m or less, still more preferably 10 $\mu$m or less, or 7 $\mu$m or less.

In the total thickness of the multilayer separator, the final thickness of the porous layer A (hereinafter, referred to as the total thickness of the porous layer A; in the case of having a plurality of porous layers A, the final thickness indicates the total of the thicknesses of the layers) and the total thickness of the porous layer B preferably satisfy the following relational expression:

$$\text{Total thickness of porous layer A} < \text{total thickness of porous layer B}$$

When the total thickness of the porous layer B is larger than the total thickness of the porous layer A, the heat resistance or insulation of the multilayer separator tends to be improved.

The lower limit of the air permeability of the multilayer separator is preferably 10 sec/100 ml or more, more preferably 20 sec/100 ml or more, still more preferably 30 sec/100 ml or more, yet still more preferably 50 sec/100 ml or more. On the other hand, the upper limit of the air permeability is preferably 650 sec/100 ml or less, more preferably 500 sec/100 ml or less, still more preferably 450 sec/100 ml or less, yet still more preferably 400 sec/100 ml or less. Setting the air permeability to be 10 sec/100 ml or more is favorable from the viewpoint of inhibiting self-discharge when the separator is used within a battery. On the other hand, setting the air permeability to 650 sec/100 ml or less is favorable from the viewpoint of obtaining good charge-discharge characteristics.

<Electricity Storage Device>

The electricity storage device according to another embodiment of the present invention is equipped with a positive electrode, the above-described multilayer separator, a negative electrode, and, if desired, an electrolytic solution.

The electricity storage device includes, specifically, a lithium battery, a lithium secondary battery, a lithium ion secondary battery, a sodium secondary battery, a sodium ion secondary battery, a magnesium secondary battery, a magnesium ion secondary battery, a calcium secondary battery, a calcium ion secondary battery, an aluminum secondary battery, an aluminum ion secondary battery, a nickel hydrogen battery, a nickel cadmium battery, an electric double layer capacitor, a lithium ion capacitor, a redox flow battery, a lithium sulfur battery, a lithium air battery, a zinc air battery, etc. Among these, in view of practicality, a lithium battery, a lithium secondary battery, a lithium ion secondary battery, a nickel hydrogen battery, and a lithium ion capacitor are preferred, and a lithium ion secondary battery is more preferred.

The electricity storage device can be manufactured, for example, by stacking together a positive electrode and a negative electrode via the multilayer separator according to the present embodiment, winding the stack, if desired, to form a laminated electrode body or a wound electrode body, loading the electrode body into an outer package, connecting the positive/negative electrodes to positive/negative electrode terminals of the outer package via a lead, etc., further injecting a nonaqueous electrolytic solution containing a nonaqueous solvent such as chain or cyclic carbonate and an electrolyte such as lithium salt into the outer package, and then sealing the outer package.

[EXAMPLES]

The present embodiment is described more specifically by referring to Examples and Comparative Examples, but the present invention is not limited to the following Examples as long as its gist is observed. Incidentally, the physical properties or cell characteristics in Examples were measured or evaluated by the following methods. In addition, when the measurement conditions are not particularly referred to, the measurement environment temperature is 23°C±2°C.

[Viscosity Average Molecular Weight (Mv)]

The limiting viscosity [η] (dl/g) at 135°C in a decalin solvent is determined based on ASTM-D4020. Mv of polyethylene was calculated according to the following formula:

$$[\eta]=6.77\times10^{-4}Mv^{0.67}$$

Mv of polypropylene was calculated according to the following formula:

$$[\eta]=1.10\times10^{-4}Mv^{0.80}$$

[Primary Particle Diameter]

A measurement target was sampled from the multilayer separator and subjected to a conductive treatment using an osmium coater (Neoc-STB, manufactured by Meiwa Forsyth) to prepare an observation sample. The sample piece was observed at a magnification of 30,000 times by means of a scanning electron microscope (S4800, manufactured by Hitachi, Ltd.), and inorganic particles were observed in a field image with a 3.0 μm length and a 3.0 μm width. When the primary particle diameter of the inorganic particles is about 1 μm or more, the sample piece was observed at a magnification of 10,000 times, and inorganic particles in a field image with a 10 μm length and a 10 μm width were observed. Incidentally, the "primary particle diameter" means the longest particle diameter in the state of individual particles being dispersed independently in a matrix or in the case where a plurality of particles are aggregated, the longest particle dimeter in a minimum aggregated particle among them. In addition, an average value of observation values at 10 points was used as the measured value.

[Degree of Surface Hydrophilicity]

At the time of measuring the specific surface area of the inorganic particle, a specific surface area ($S_{Water}$) of the inorganic particle when using water vapor as the absorbate was divided by a specific surface area ($S_{Nitrogen}$) of the inorganic particle when using nitrogen as the absorbate to calculate the degree of surface hydrophilicity ($S_{Water}/S_{Nitrogen}$). Here, the measurement of the specific surface area is carried out in conformity with JIS A 8830:2013. The measurement was carried out with 3Flex manufactured by Micromeritics Instrument Corporation.

[Thickness (μm)]

The film thickness of the sample was measured using a dial gage (PEACOCK No. 25 (registered trademark) manufactured by Ozaki Mfg. Co., Ltd.). A sample of MD 10 mm×TD 10 mm was cut from the porous membrane, and the thickness was measured in 9 places (3 points×3 points) arranged in a grid pattern. An average value of the obtained measured values was calculated as the film thickness (μm) or the layer thickness.
Incidentally, the thickness of each single layer obtained in the present Example and Comparative Example was measured in the state of a single layer obtained in each production step. In the case of a laminated state, the thickness was calculated by subtracting the value of the single layer measured above. With respect to those which are obtained by coextrusion and cannot provide a single-layer state, the thickness of each layer was calculated from cross-sectional SEM.

[Air Permeability (sec/100 ml)]

The air permeability was measured using a Gurley air permeability tester (G-B2 (trademark) manufactured by Toyo Seiki Kogyo Co., Ltd.) in conformity with JIS P-8117.

[Puncture Strength (gf)]

Using a handy compression tester "KES-G5" (manufactured by Kato Tech Corp.), the microporous membrane was anchored with a specimen holder having an opening diameter of 11.3 mm. In the central part of the anchored microporous membrane, a puncture test was carried out under the conditions of a needle tip curvature radius of 0.5 mm and a puncture speed of 2 mm/sec in a 25°C atmosphere to thereby measure the puncture strength (gf) as the maximum puncture load.

[Peel Strength (N/m)]

The peel strength was measured using a tensile tester (Autograph AG-IS) manufactured by Shimadzu Corporation in a 25°C environment.
The separator was cut out into a size of 2.5 cm×10 cm, and the base material surface was fixed to a glass plate with a double-sided tape (NICETACK NWBB-15, manufactured by Nichiban Co., Ltd.). In the case where only one surface of the surface layer is the porous layer B, Scotch (registered trademark) Mending Tape MP-12 manufactured by 3M was attached to the inorganic particle-containing porous layer. About 5 mm at the end of the attached tape was peeled off, the tape side and the base material side were fixed respectively to the upper side (pulling side) of the tensile tester and the lower side (fixed side) of the tensile tester, the tape was pulled at a rate of 100 mm/min in the 180° direction with respect to the porous layer surface, and the average load between 10 mm and 40 mm in terms of displacement of the peeling tape was taken as the peel strength.

[NMR]

<Measurement of Diffusion Coefficient D of Fluoride Ion by Magnetic Field Gradient NMR Method>

1. Preparation of Sample

The separator was punched out to have a diameter of 4 mm$\phi$ and introduced into the NMR tube to a height of 5 mm by stacking the punched-out sheets. As the NMR tube, a micro sample tube manufactured by SHIGEMI CO., LTD. was used. An ethylene carbonate (EC) and methyl ethyl carbonate (MEC) mixture (volume ratio: 1:2) solution of 1 M lithium bis(trifluoromethanesulfonyl)imide (LiTFSI) was added as the electrolytic solution to the NMR tube, and the separator was immersed overnight in the electrolytic solution. The surplus electrolytic solution except for the electrolytic solution impregnated into the separator was removed, and the obtained sample was used for the measurement.

2. Measurement Conditions

Apparatus: JNM-ECA400 (manufactured by JEOL Ltd.)
Observation nucleus: $^{19}F$
Measurement frequency: 372.5 MHz
Lock solvent: none
Measurement temperature: 30°C
Pulse sequence: bpp_led_dosy_pfg
$\Delta$: 20 ms
$\delta$: 0.3 ms to 0.6 ms

In the magnetic field gradient NMR measurement method, denoting as E the peak height observed, as $E_0$ the peak height when a magnetic field gradient pulse is not applied, as $\gamma(T^{-1} \cdot s^{-1})$ the nuclear gyromagnetic ratio, as $g(T \cdot m^{-1})$ the magnetic field gradient strength, as $\delta(s)$ the magnetic field gradient pulse application time, as $\Delta(s)$ the diffusion time, and as $D(m^2 \cdot s^{-1})$ the self-diffusion coefficient, the following formula is established:

$$Ln(E/E_0)=D\times\gamma^2\times g^2\times\delta^2\times(\Delta-\delta/3)$$

While fixing $\Delta$ and $\delta$, g is changed at 10 or more points in the range from 0 to $Ln(E/E_0)\leq-3$ and the diffusion coefficient D was calculated from the slope of a straight line obtained by plotting $Ln(E/E_0)$ on the Y axis and $\gamma^2\times g^2\times\delta^2\times(\Delta-\delta/3)$ on the X axis.

Peaks assigned to fluoride ion impregnated into the porous layer A containing a polyolefin resin and the porous layer B containing inorganic particles are observed at -90 ppm to -70 ppm of the NMR spectrum, and while the peak observed on the high magnetic field side is taken as the porous layer A, the peak observed on the low magnetic field side is taken as the porous layer B. From the peak heights of these porous layer A and porous layer B, the diffusion coefficient D of fluoride ion contained in each of the porous layer A and the porous layer B was determined.

<Measurement of Permeation Rate r and Permeability Index S of Fluoride Ion by Exchange NMR Method>

1. Preparation of Sample

The separator was punched out to have a diameter of 4 mm$\phi$ and introduced into the NMR tube to a height of 5 mm by stacking the punched-out sheets. However, the porous layer B containing inorganic particles was not stacked on the porous layer A but was stacked such that porous layers B are necessarily stacked one on another. As the NMR tube, a micro sample tube manufactured by SHIGEMI CO., LTD. was used. An EC and MEC mixture (volume ratio: 1:2) solution of 1 M LiTFSI was added as the electrolytic solution to the NMR tube, and the separator was immersed overnight in the electrolytic solution. The surplus electrolytic solution except for the electrolytic solution impregnated into the separator was removed, and the obtained sample was used for the measurement.

2. Measurement Conditions

Apparatus: JNM-ECS400 (manufactured by JEOL Ltd.)
Observation nucleus: $^{19}$F
Measurement frequency: 376.2 MHz
Lock solvent: none
Measurement temperature: 30°C
Pulse sequence: noesy_phase
Number of direct observation axis points: 1024
Number of indirect observation axis points: 256
Mixing time: 20 ms, 100 ms

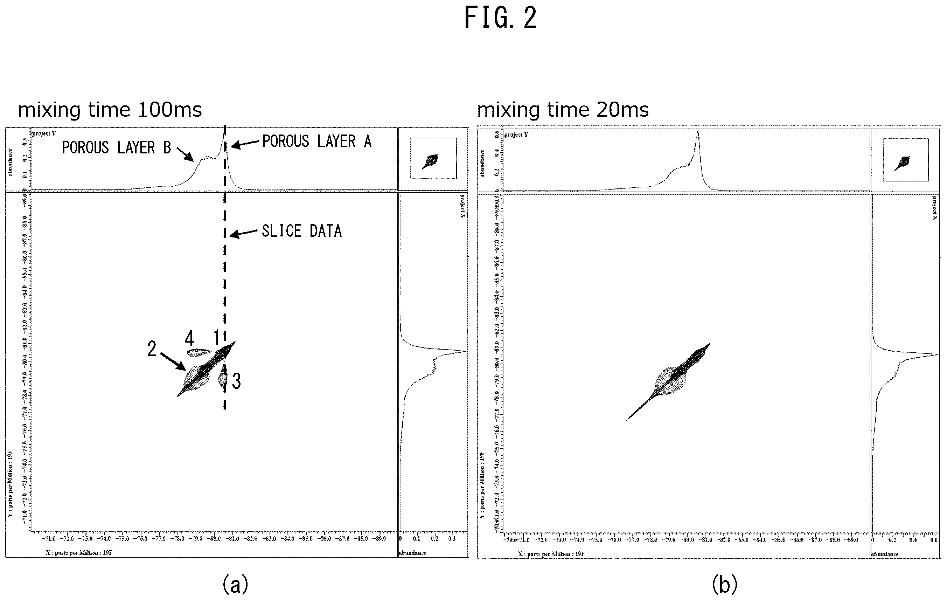

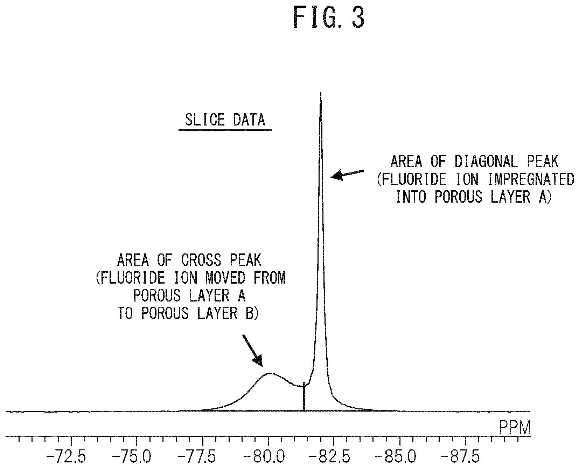

In the exchange NMR measurement, the permeation rate r and permeability index S of fluoride ion between the porous layer A containing a polyolefin resin and the porous layer B containing inorganic particles were determined.
Measurement of Ion Permeation Rate r(AB):
The permeation rate r(AB) of fluoride ion moving from the porous layer A to the porous layer B was determined as follows by performing exchange NMR measurement with a mixing time of 100 ms.

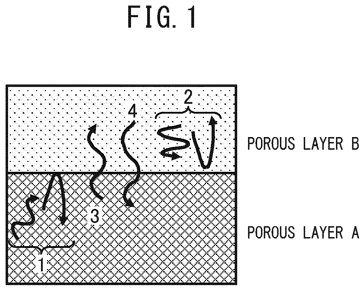

Fig. 1 is a schematic diagram for explaining the ion diffusion behavior in a multilayer separator for an electricity storage device, including a porous layer A containing a polyolefin resin and a porous layer B containing an inorganic particle. In Fig. 1, a diffusion behavior 1 of fluoride ion impregnated into the porous layer A, a diffusion behavior 2 of fluoride ion impregnated into the porous layer B, a diffusion behavior 3 of fluoride ion moved from the porous layer A to the porous layer B, and a diffusion behavior 4 of fluoride ion moved from the porous layer B to the porous layer A are depicted.
In reference to Fig. 2(a) illustrating one example of the exchange NMR spectrum with a mixing time of 100 ms, out of peaks observed at -90 ppm to -70 ppm of the direct observation axis, by taking the peak on the high magnetic field side as the peak assigned to fluoride ion impregnated into the porous layer A and the peak on the low magnetic field side as the peak of fluoride ion impregnated into the porous layer B, a slice data (Fig. 3) at a peak maximum of the porous layer A was acquired.
In the slice data (Fig. 3), the peak position of the porous layer A is a diagonal peak (represents the fluoride ion impregnated into the porous layer A and corresponds to the ion diffusion behavior 1 depicted in the schematic diagram of Fig. 1), and the peak position of the porous layer B is a cross peak (represents the fluoride having moved from the porous layer A to the porous layer B and corresponds to the ion diffusion behavior 3 depicted in the schematic diagram of Fig. 1).

The value (%) determined according to the following formula:

$$\text{Cross peak area/(diagonal peak area + cross peak area)} \times 100$$

was taken as the ion permeation rate r(AB).

Incidentally, when the peaks are in proximity, the diagonal peak and the cross peak were separated by a perpendicular line drawn to the direct observation axis from an extreme value between a peak and a peak (Fig. 3), and the areas of respective peaks were determined.

Measurement of Ion Permeability Index S(AB):

The permeation rate r(AB) was calculated for each of data with 20 ms and 100 ms mixing times by performing exchange NMR measurement with a mixing time of 20 ms (for example, the case of Fig. 2(b)) and with a mixing time of 100 ms (for example, the case of Fig. 2(a)). The rate of change S (%/ms) in the ion permeation rate r(AB) between 20 ms and 100 ms mixing times was calculated according to the following formula:

$$S = \{(\text{ion permeation rate r(AB) with 100 ms}) - (\text{ion permeation rate r(AB) with 20 ms})\}/(100\text{-}20)$$

and taken as the ion permeability index S(AB).

[High-Rate Cycle]

a. Fabrication of Positive Electrode

90.4 weight% of a nickel-manganese-cobalt composite oxide (NMC) (Ni:Mn:Co=1:1:1 (element ratio), density: 4.70 g/cm$^3$, capacity density: 175 mAh/g) as a positive electrode active material, 1.6 weight% of graphite powder (KS6) (density: 2.26 g/cm$^3$, number average particle diameter: 6.5 $\mu$m) and 3.8 weight% of acetylene black powder (AB) (density: 1.95 g/cm$^3$, number average particle diameter: 48 nm) as conductive aids, and 4.2 weight% of polyvinylidene fluoride (PVDF) (density: 1.75 g/cm$^3$) as a binder were mixed and dispersed in N-methylpyrrolidone (NMP) to prepare a slurry. The slurry was applied onto one surface of a 20 $\mu$m-thick aluminum foil as a positive electrode current collector, by means of a die coater, and after a step of drying at 130°C for 3 minutes, rolled using a roll press machine. The amount of the positive electrode active material applied here was 109 g/m$^2$.

b. Fabrication of Negative Electrode

87.6 weight% of graphite powder A (density: 2.23 g/cm$^3$, number average particle diameter: 12.7 $\mu$m) and 9.7 weight% of graphite powder B (density: 2.27 g/cm$^3$, number average particle diameter: 6.5 $\mu$m) as negative electrode active materials, and 1.4 weight% (in terms of solid content) of an ammonium salt of carboxymethyl cellulose (an aqueous solution having a solid content concentration of 1.83 weight%) and 1.7 weight% (in terms of solid content) of a diene rubber-based latex (an aqueous solution having a solid content concentration of 40 weight%) as binders, were dispersed in purified water to prepare a slurry. The slurry was applied onto one surface of a 12 $\mu$m-thick copper foil as a negative electrode current collector, by means of a die coater and after a step of drying at 120°C for 3 minutes, rolled using a roll press machine. The amount of the negative electrode active material applied here was 52 g/m$^2$.

c. Preparation of Nonaqueous Electrolytic Solution

In a mixed solvent (Lithium Battery Grade, produced by Kishida Chemical Co., Ltd.) prepared by mixing ethylene carbonate (EC) and ethyl methyl carbonate (EMC) at a volume ratio of 1:2, LiPF$_6$ was dissolved to a concentration of 1 mol/L. Furthermore, 2 wt% of vinylene carbonate (VC) and 0.5 wt% of propanesultone (PS) were added as additives thereto so as to obtain a nonaqueous electrolyte electrolytic solution.

d. Assembly of Battery

The separator was punched out into a circular shape with a diameter of 24 mm, and the positive electrode fabricated in item a. was punched out into a circular shape with an area of 2.00 cm$^2$. Furthermore, the negative electrode fabricated in item b. was punched out into a circular shape with an area of 2.05 cm$^2$.

The negative electrode, the separator and the positive electrode were stacked in order from the lower side in the vertical direction by arranging the positive and negative electrode active material surfaces to face each other, and the stack was housed in a stainless metal-made container with an aluminum-made cover. The container was insulated from the cover, and the container and the cover were contacted with the copper foil of negative electrode and the aluminum foil of positive electrode, respectively. A simple battery with a capacity of 3 mAh was assembled by injecting the nonaqueous electrolytic solution above into the container and tightly sealing the container.

e. Evaluation of High-Rate Cycle (5 C/5 C)

The simple battery as a nonaqueous electrolyte secondary battery obtained in item d. was charged at a constant current of 0.3 C in an environment of 25°C until reaching 4.2 V, then charged at a constant voltage of 4.2 V, and discharged to 3.0 V at a constant current of 0.3 C. The total of the charging time at a constant current and the charging time at a constant voltage was 8 hours. Note that 1 C is a current value at which the battery is discharged in one hour.

Next, the battery was charged at a constant current of 1 C until reaching 4.2 V, then charged at a constant voltage of 4.2 V, and discharged to 3.0 V at a constant current of 1 C. The total of the charging time at a constant current and the charging time at a constant voltage was 3 hours. This cycle was carried out three times. Subsequently, the battery was charged at a constant current of 1 C until reaching 4.2 V, then charged at a constant voltage of 4.2 V, and discharged to 3.0 V at a constant current of 5 C. The capacity when discharged at a constant current of 5 C was designated as the discharge capacity (mAh) at the first cycle.

Furthermore, a cycle consisting of charging to 4.2 V at a constant current of 5 C, resting for 10 minutes, discharging to 3.0 V at a constant current of 5 C, and resting for 10 minutes was repeated 100 times, and the 5 C discharge capacity at the 100th cycle was measured.

The cycle retention rate was calculated according to the following formula:

$$\text{Cycle retention rate} = 5 \text{ C discharge capacity at 100th cycle}/5 \text{ C discharge capacity at first cycle} \times 100$$

The obtained cycle retention rate was evaluated according to the following criteria.

    A: Storage characteristics are more than 80%.
    B: Storage characteristics are more than 70% and 80% or less.
    C: Storage characteristics are more than 60% and 70% or less.
    D: Storage characteristics are 60% or less.

<Production of Microporous Membrane (A)>

Production Example A-1:

47.5 parts by weight of a high-density polyethylene homopolymer having a viscosity average molecular weight (Mv) of 700,000, 47.5 parts by weight of a high-density polyethylene homopolymer with Mv of 300,000, and 5 parts by weight of a polypropylene homopolymer with Mv of 400,000 were dry blended using a tumbler blender. To 99 parts by weight of the obtained polyolefin mixture, 1 part by weight of tetrakis-[methylene-(3',5'-di-tert-butyl-4'-hydroxyphenyl)propionate] methane was added as an antioxidant, and these were again dry blended using a tumbler blender to obtain a mixture.

The obtained mixture was fed to the feed port of a co-directional twin-screw extruder by means of a feeder. In addition, liquid paraffin "SMOIL P-350P" (produced by Matsumura Oil Research Corp.) was side-fed to the twin-screw extruder cylinder such that the liquid paraffin amount ratio in the total mixture (100 parts by weight) extruded after melt kneading becomes 67 parts by weight. The set temperature was 160°C in the kneading section and 180°C in the T-die. Subsequently, the melt-kneaded product was extruded into a sheet form from the T-die and cooled with a cooling roll controlled to a surface temperature of 70°C to obtain a sheet-shaped polyolefin resin composition having a thickness of 1,260 μm. The sheet was then consecutively introduced into a simultaneous biaxial tender and subjected to simultaneous biaxial stretching at a ratio of 7 times in the longitudinal direction and 6.4 times in the transverse direction. The set temperature at stretching here was 120°C. Subsequently, the stretched sheet was introduced into a methylene chloride bath and sufficiently immersed in methylene chloride to remove the liquid paraffin by extraction. After drying the methylene chloride, the sheet was further introduced into a lateral tenter and stretched at a ratio of 1.75 times in the transverse direction, and thereafter, the relaxation rate was set to 14.3% so as to adjust the stretch ratio to 1.50 times at the final exit (relaxation rate = (1.75-1.5)/1.75x100 = 14.3%). The resulting polyolefin microporous membrane was wound up. The set temperature in the transverse stretching section was 125°C, and the set temperature in the relaxation section was 130°C.

Production Example A-3:

47.5 parts by weight of a high-density polyethylene homopolymer having a viscosity average molecular weight (Mv) of 700,000, 47.5 parts by weight of a high-density polyethylene homopolymer with Mv of 300,000, and 5 parts by weight of a polypropylene homopolymer with Mv of 400,000 were dry blended using a tumbler blender. To 99 parts by weight of the obtained polyolefin mixture, 1 part by weight of tetrakis-[methylene-(3',5'-di-tert-butyl-4'-hydroxyphenyl)propionate] methane was added as an antioxidant, and these were again dry blended using a tumbler blender to obtain Mixture A.

47 parts by weight of boehmite "CATAPAL" (produced by Sasol Limited) having an average primary particle diameter of 40 nm, and 47 parts by weight of liquid paraffin "SMOIL P-350P" (produced by Matsumura Oil Research Corp.) were added to and mixed by a supermixer. 6 parts by weight of stearic acid was added dropwise with stirring, and the supermixer was heated up to 120°C. After reaching 120°C, stirring was carried out for 30 minutes to effect a surface treatment of the boehmite. To 90 parts by weight of the resulting surface-treated boehmite, 10 parts by weight of a ultra-high molecular weight polyethylene having a viscosity average molecular weight (Mv) of 2,000,000 and a melting point of 134°C, and 0.1 parts by weight of tetrakis-[methylene-(3',5'-di-tert-butyl-4'-hydroxyphenyl)propionate] methane as an antioxidant were added, and these were premixed by a supermixer to obtain Mixture B.

Subsequently, a laminated sheet was formed by a coextrusion method. Mixtures A and B were fed respectively to feed ports of two units of co-directional twin-screw extruder by means of a feeder. As for Mixture A, liquid paraffin was side-fed to the twin-screw extruder cylinder such that the liquid paraffin amount ratio in the total mixture (100 parts by weight) extruded becomes 65 parts by weight. As for Mixture B, liquid paraffin was side-fed to the twin-screw extruder cylinder such that the liquid paraffin amount ratio in the total mixture (100 parts by weight) extruded becomes 50 parts by weight. Thereafter, the compositions melt-kneaded by respective extruders were extruded into a sheet form through a T-die capable of performing two-type three-layer coextrusion, and the sheet was then cooled with a cooling roll controlled to a surface temperature of 70°C to obtain a sheet-shaped polyolefin resin composition having a thickness of 1,260 $\mu$m. The kneading temperature of Mixture A was 160°C, and the composition was extruded in an extrusion amount of 8 kg/hr from the outer layer (surface layer) of the T-die set at a temperature of 200°C. The kneading temperature of Mixture B was 160°C, and the composition was extruded in an extrusion amount of 14 kg/hr from the inner layer (intermediate layer) of the T-die set at a temperature of 200°C.

The sheet-shaped polyolefin resin composition was then consecutively introduced into a simultaneous biaxial tender and subjected to simultaneous biaxial stretching at a ratio of 7 times in the longitudinal direction and 6.4 times in the transverse direction. The set temperature at stretching here was 122°C. Next, the stretched sheet was introduced into a methylene chloride bath and sufficiently immersed in methylene chloride to remove the liquid paraffin by extraction. After drying the methylene chloride, the sheet was further introduced into a lateral tenter and stretched at a ratio of 1.8 times in the transverse direction, and thereafter, the relaxation rate was set to 16.7% so as to adjust the stretch ratio to 1.5 times at the final exit (relaxation rate = (1.8-1.5)/1.8x100 = 16.7%). The resulting multilayer film in which a polyolefin porous layer and an inorganic particle-containing polyolefin porous layer are stacked was wound up. The set temperature in the transverse stretching section was 127°C, and the set temperature in the relaxation section was 133°C.

Production Example A-4:

200 L of water was poured in a stirring bath, and 50 kg of barium sulfate (primary particle diameter: 90 nm) was charged thereinto, followed by temperature adjustment to 70°C with stirring. A 2-isopropanol solution containing stearic acid corresponding to 8 weight% of barium sulfate was added little by little to the stirring bath and stirred at 70°C for 30 minutes. Subsequently, an aqueous solution containing barium hydroxide corresponding to a substance amount of 1/2 of stearic acid was added little by little and stirred for 30 minutes. Thereafter, the solid was separated by filtration, dried and then micronized by disintegration to obtain a surface-treated barium sulfate powder. The degree of surface hydrophilicity of the obtained barium sulfate was 0.68.

To 95 parts by weight of barium sulfate subjected to the surface treatment above, 5 parts by weight of a high-density polyethylene homopolymer having a viscosity average molecular weight (Mv) of 700,000, and 0.05 parts by weight of tetrakis-[methylene-(3',5'-di-tert-butyl-4'-hydroxyphenyl)propionate] methane as an antioxidant were added, and these were premixed by a supermixer to obtain Mixture B.

47.5 parts by weight of a high-density polyethylene homopolymer having a viscosity average molecular weight (Mv) of 700,000, 47.5 parts by weight of a high-density polyethylene homopolymer with Mv of 300,000, and 5 parts by weight of a polypropylene homopolymer with Mv of 400,000 were dry blended using a tumbler blender. To 99 parts by weight of the obtained polyolefin mixture, 1 part by weight of tetrakis-[methylene-(3',5'-di-tert-butyl-4'-hydroxyphenyl)propionate]methane was added as an antioxidant, and these were again dry blended using a tumbler blender to obtain Mixture A.

Subsequently, a laminated sheet was formed by a coextrusion method. Mixtures A and B were fed respectively to feed ports of two units of co-directional twin-screw extruder by means of a feeder. As for Mixture A, liquid paraffin was side-fed to the twin-screw extruder cylinder such that the liquid paraffin amount ratio in the total mixture (100 parts by weight) extruded becomes 65 parts by weight. As for Mixture B, liquid paraffin was side-fed to the twin-screw extruder cylinder such that the liquid paraffin amount ratio in the total mixture (100 parts by weight) extruded becomes 27 parts by weight. Thereafter, the compositions melt-kneaded by respective extruders were extruded into a sheet form through a T-die capable of performing two-type three-layer coextrusion, and the sheet was then cooled with a cooling roll controlled to a surface temperature of 70°C to obtain a sheet-shaped polyolefin resin composition having a thickness of 1,260 μm. The kneading temperature of Mixture A was 160°C, and the composition was extruded in an extrusion amount of 8 kg/hr from the outer layer (surface layer) of the T-die set at a temperature of 200°C. The kneading temperature of Mixture B was 160°C, and the composition was extruded in an extrusion amount of 14 kg/hr from the inner layer (intermediate layer) of the T-die set at a temperature of 200°C.

The sheet-shaped polyolefin resin composition was then consecutively introduced into a simultaneous biaxial tender and subjected to simultaneous biaxial stretching at a ratio of 7 times in the longitudinal direction and 6.4 times in the transverse direction. The set temperature at stretching here was 122°C. Next, the stretched sheet was introduced into a methylene chloride bath and sufficiently immersed in methylene chloride to remove the liquid paraffin by extraction. After drying the methylene chloride, the sheet was further introduced into a lateral tenter and stretched at a ratio of 1.8 times in the transverse direction, and thereafter, the relaxation rate was set to 16.7% so as to adjust the stretch ratio to 1.5 times at the final exit (relaxation rate = $(1.8-1.5)/1.8 \times 100 = 16.7\%$). The resulting multilayer film in which a polyolefin porous layer and an inorganic particle-containing polyolefin porous layer are stacked was wound up. The set temperature in the transverse stretching section was 127°C, and the set temperature in the relaxation section was 133°C.

Production Example A-5:

A surface treatment of barium sulfate was conducted in the same manner as in Production Example A-4 except that barium sulfate having a primary particle diameter of 90 nm was changed to barium sulfate having a primary particle diameter of 200 nm and the amount added of stearic acid was changed to give the degree of surface hydrophilicity shown in Table 2. Furthermore, a microporous membrane was produced in the same manner as in Production Example A-4 except that the composition ratio of Mixture B was changed to 97 parts by weight of barium sulfate, 3 parts by weight of high-density polyethylene, and 0.03 parts by weight of antioxidant.

Production Example A-6:

A microporous membrane was produced in the same manner as in Production Example A-5 except that the composition ratio of Mixture B was changed to 70 parts by weight of barium sulfate, 30 parts by weight of high-density polyethylene, and 0.3 parts by weight of antioxidant.

Production Example A-7:

A surface treatment of barium sulfate was conducted in the same manner as in Production Example A-4 except that barium sulfate having a primary particle diameter of 90 nm was changed to barium sulfate having a primary particle diameter of 200 nm and the amount added of stearic acid was changed to give the degree of surface hydrophilicity shown in Table 2. Furthermore, a microporous membrane was produced in the same manner as in Production Example A-4 except that the composition ratio of Mixture B was changed to 97 parts by weight of barium sulfate, 3 parts by weight of high-density polyethylene, and 0.03 parts by weight of antioxidant.

Production Example A-8:

47.5 parts by weight of a high-density polyethylene homopolymer having a viscosity average molecular weight (Mv) of 700,000, 47.5 parts by weight of a high-density polyethylene homopolymer with Mv of 300,000, and 5 parts by weight of a polypropylene homopolymer with Mv of 400,000 were dry blended using a tumbler blender. To 99 parts by weight of the obtained polyolefin mixture, 1 part by weight of tetrakis-[methylene-(3',5'-di-tert-butyl-4'-hydroxyphenyl)propionate] methane was added as an antioxidant, and these were again dry blended using a tumbler blender to obtain Mixture A.

100 parts by weight of boehmite having an average primary particle of 700 nm was charged into a supermixer. 0.7 parts by weight of stearic acid was added dropwise with stirring, and the supermixer was heated up to 120°C. After reaching 120°C, stirring was carried out for 30 minutes to effect a surface treatment of the boehmite. To 95 parts by weight of the resulting surface-treated boehmite, 5 parts by weight of a high-density polyethylene homopolymer having a viscosity average molecular weight (Mv) of 700,000, and 0.1 parts by weight of tetrakis-[methylene-(3',5'-di-tert-butyl-4'-hydroxyphenyl)propionate] methane as an antioxidant were added, and these were premixed by a supermixer to obtain Mixture B.

Subsequently, a laminated sheet was formed by a coextrusion method. Mixtures A and B were fed respectively to feed ports of two units of co-directional twin-screw extruder by means of a feeder. As for Mixture A, liquid paraffin was side-fed to the twin-screw extruder cylinder such that the liquid paraffin amount ratio in the total mixture (100 parts by weight) extruded becomes 65 parts by weight. As for Mixture B, liquid paraffin was side-fed to the twin-screw extruder cylinder such that the liquid paraffin amount ratio in the total mixture (100 parts by weight) extruded becomes 36 parts by weight. Thereafter, the compositions melt-kneaded by respective extruders were extruded into a sheet form through a T-die capable of performing two-type three-layer coextrusion, and the sheet was then cooled with a cooling roll controlled to a surface temperature of 70°C to obtain a sheet-shaped polyolefin resin composition having a thickness of 1,260 $\mu$m. The kneading temperature of Mixture A was 160°C, and the composition was extruded in an extrusion amount of 8 kg/hr from the outer layer (surface layer) of the T-die set at a temperature of 200°C. The kneading temperature of Mixture B was 160°C, and the composition was extruded in an extrusion amount of 14 kg/hr from the inner layer (intermediate layer) of the T-die set at a temperature of 200°C.

The sheet-shaped polyolefin resin composition was then consecutively introduced into a simultaneous biaxial tender and subjected to simultaneous biaxial stretching at a ratio of 7 times in the longitudinal direction and 6.4 times in the transverse direction. The set temperature at stretching here was 122°C. Next, the stretched sheet was introduced into a methylene chloride bath and sufficiently immersed in methylene chloride to remove the liquid paraffin by extraction. After drying the methylene chloride, the sheet was further introduced into a lateral tenter and stretched at a ratio of 1.8 times in the transverse direction, and thereafter, the relaxation rate was set to 16.7% so as to adjust the stretch ratio to 1.5 times at the final exit (relaxation rate = $(1.8-1.5)/1.8 \times 100 = 16.7\%$). The resulting multilayer film in which a polyolefin porous layer and an inorganic particle-containing polyolefin porous layer are stacked was wound up. The set temperature in the transverse stretching section was 127°C, and the set temperature in the relaxation section was 133°C.

Production Example A-9:

A surface treatment of boehmite was conducted in the same manner as in Production Example A-8 except that the amount added of stearic acid was changed to give the degree of surface hydrophilicity shown in Table 2. Furthermore, a microporous membrane was produced in the same manner as in Production Example A-8 except that the composition ratio of Mixture B was changed to 70 parts by weight of boehmite, 30 parts by weight of high-density polyethylene, and 0.3 parts by weight of antioxidant.

Production Example A-10:

A microporous membrane was produced in the same manner as in Production Example A-8 except that boehmite having a primary particle diameter of 700 nm was changed to boehmite having a primary particle diameter of 2.4 $\mu$m and the amount added of stearic acid was changed to give the degree of surface hydrophilicity shown in Table 2.

Production Example A-11:

A surface treatment of boehmite was conducted in the same manner as in Production Example A-8 except that boehmite having a primary particle diameter of 700 nm was changed to boehmite having a primary particle diameter of 1.4 $\mu$m and the amount added of stearic acid was changed to give the degree of surface hydrophilicity shown in Table 2. Furthermore, a microporous membrane was produced in the same manner as in Production Example A-8 except that the compositions were extruded by changing Mixture A to the inner layer (intermediate layer) of the T-die and Mixture B to the outer layer (surface layer) of the T-die.

Production Example A-12:

50 parts by weight of a high-density polyethylene homopolymer having a viscosity average molecular weight (Mv) of 700,000 and 50 parts by weight of a high-density polyethylene homopolymer with Mv of 270,000 were dry blended using a tumbler blender. To 99.7 parts by weight of the obtained polyolefin mixture, 0.3 parts by weight of pentaerythrityl-tetrakis-[3-(3,5-di-tert-butyl-4-hydroxyphenyl)propionate] was added as an antioxidant, and these were again dry blended using a tumbler blender to obtain Mixture A.

60 parts by weight of silica ("DM10C", produced by Tokuyama Corporation, dimethyldichlorosilane-treated) having an average primary particle diameter of 15 nm, 16 parts by weight of a ultra-high molecular weight polyethylene having a viscosity average molecular weight (Mv) of 2,000,000, 24 parts by weight of homopolypropylene with Mv of 400,000, 72 parts by weight of liquid paraffin "SMOIL P-350P" (produced by Matsumura Oil Research Corp.) as a plasticizer, and 0.3 parts by weight of pentaerythrityl-tetrakis-[3-(3,5-di-tert-butyl-4-hydroxyphenyl)propionate] as an antioxidant were added, and these were premixed by a supermixer to obtain Mixture B.

Subsequently, a laminated sheet was formed by a coextrusion method. Mixtures A and B were fed respectively to feed ports of two units of co-directional twin-screw extruder by means of a feeder. As for Mixture A, liquid paraffin was side-fed to the twin-screw extruder cylinder such that the liquid paraffin amount ratio in the total mixture (100 parts by weight) extruded becomes 60 parts by weight. As for Mixture B, liquid paraffin was side-fed to the twin-screw extruder cylinder such that the liquid paraffin amount ratio in the total mixture (100 parts by weight) extruded becomes 60 parts by weight. Thereafter, the compositions melt-kneaded by respective extruders were extruded into a sheet form through a T-die capable of performing two-type three-layer coextrusion, and the sheet was then cooled with a cooling roll controlled to a surface temperature of 30°C to obtain a sheet-shaped polyolefin resin composition having a thickness of 1,200 $\mu$m. The kneading temperature of Mixture A was 200°C, and the composition was extruded in an extrusion amount of 16 kg/hr from the inner layer (intermediate layer) of the T-die set at a temperature of 220°C. The kneading temperature of Mixture B was 200°C, and the composition was extruded in an extrusion amount of 5 kg/hr from the outer layer (surface layer) of the T-die set at a temperature of 220°C.

The sheet-shaped polyolefin resin composition was then consecutively introduced into a simultaneous biaxial tender and subjected to simultaneous biaxial stretching at a ratio of 7 times in the longitudinal direction and 7 times in the transverse direction. The set temperature at stretching here was 123°C. Next, the stretched sheet was introduced into a methylene chloride bath and sufficiently immersed in methylene chloride to remove the liquid paraffin by extraction. After drying the methylene chloride, the sheet was further introduced into a lateral tenter and stretched at a ratio of 1.4 times in the transverse direction, and thereafter, the relaxation rate was set to 14.3% so as to adjust the stretch ratio to 1.2 times at the final exit (relaxation rate = (1.4-1.2)/1.4 $\times$ 100 = 14.3%). The resulting multilayer film in which a polyolefin porous layer and an inorganic particle-containing polyolefin porous layer are stacked was wound up. The set temperature in the transverse stretching section was 120°C, and the set temperature in the relaxation section was 125°C.

Production Example A-13:

95 parts by weight of a high-density polyethylene homopolymer having a viscosity average molecular weight (Mv) of 250,000 and 5 parts by weight of a homopolypropylene with Mv of 400,000 were dry blended using a tumbler blender. Furthermore, 0.1 parts by weight of tetrakis-[methylene-(3',5'-di-tert-butyl-4'-hydroxyphenyl)propionatel methane was added as an antioxidant, and these were again dry blended using a tumbler blender to obtain Mixture A.

98 parts by weight of silica ("AEROSIL 130", produced by Aerosil) having an average primary particle diameter of 16 nm, 2 parts by weight of a high-density polyethylene having a viscosity average molecular weight (Mv) of 700,000, 98 parts by weight of liquid paraffin "SMOIL P-350P" (produced by Matsumura Oil Research Corp.) as a plasticizer, and 0.1 parts by weight of tetrakis-[methylene-(3',5'-di-tert-butyl-4'-hydroxyphenyl)propionate]methane as an antioxidant were added, and these were premixed by a supermixer to obtain Mixture B.

Subsequently, a laminated sheet was formed by a coextrusion method. Mixtures A and B were fed respectively to feed ports of two units of co-directional twin-screw extruder by means of a feeder. As for Mixture A, liquid paraffin was side-fed to the twin-screw extruder cylinder such that the liquid paraffin amount ratio in the total mixture (100 parts by weight) extruded becomes 65 parts by weight. As for Mixture B, liquid paraffin was side-fed to the twin-screw extruder cylinder such that the liquid paraffin amount ratio in the total mixture (100 parts by weight) extruded becomes 60 parts by weight. Thereafter, the compositions melt-kneaded by respective extruders were extruded into a sheet form through a T-die capable of performing two-type three-layer coextrusion, and the sheet was then cooled with a cooling roll controlled to a surface temperature of 30°C to obtain a sheet-shaped polyolefin resin composition having a thickness of 1,200 $\mu$m. The kneading temperature of Mixture A was 200°C, and the composition was extruded in an extrusion amount of 8 kg/hr from the outer layer (surface layer) of the T-die set at a temperature of 200°C. The kneading temperature of Mixture B was 200°C, and the composition was extruded in an extrusion amount of 14 kg/hr from the inner layer (intermediate layer) of the T-die set at a temperature of 200°C.

The sheet-shaped polyolefin resin composition was then consecutively introduced into a simultaneous biaxial tender and subjected to simultaneous biaxial stretching at a ratio of 7 times in the longitudinal direction and 6 times in the transverse direction. The set temperature at stretching here was 123°C. Next, the stretched sheet was introduced into a methylene chloride bath and sufficiently immersed in methylene chloride to remove the liquid paraffin by extraction. After drying the methylene chloride, the sheet was further introduced into a lateral tenter and stretched at a ratio of 1.4 times in the transverse direction, and thereafter, the relaxation rate was set to 14.3% so as to adjust the stretch ratio to 1.2 times at the final exit (relaxation rate = $(1.4-1.2)/1.4 \times 100 = 14.3\%$). The resulting multilayer film in which a polyolefin porous layer and an inorganic particle-containing polyolefin porous layer are stacked was wound up. The set temperature in the transverse stretching section was 130°C, and the set temperature in the relaxation section was 130°C.

Production Example A-14:

A microporous membrane was produced in the same manner as in Production Example A-8 except that boehmite having a primary particle diameter of 700 nm was changed to boehmite having a primary particle diameter of 1.4 $\mu$m and the amount added of stearic acid was changed to give the degree of surface hydrophilicity shown in Table 3.

Production Example A-15:

A microporous membrane was produced in the same manner as in Production Example A-8 except that boehmite having a primary particle diameter of 700 nm was changed to boehmite having a primary particle diameter of 3.5 $\mu$m and the boehmite was used without performing a surface treatment.

A laminated sheet was formed by a coextrusion method, and the sheet-shaped polyolefin resin composition was then consecutively introduced into a simultaneous biaxial tender and subjected to simultaneous biaxial stretching at a ratio of 7 times in the longitudinal direction and 6.4 times in the transverse direction. However, the sheet repeatedly underwent breakage during stretching and could not be stretched.

<Production of Inorganic Particle-Containing Coating Material>

Coating Material A:

95.0 parts by weight of aluminum hydroxide oxide (average particle diameter: 1.4 $\mu$m) as an inorganic particle and 0.4 parts by weight (in terms of solid content) of an aqueous ammonium polycarboxylate solution (SN Dispersant 468, produced by San Nopco, Ltd., solid content concentration: 40%) as an ionic dispersant were uniformly dispersed in 100 parts by weight of water to prepare a dispersion liquid. The obtained dispersion liquid was subjected to a disintegration treatment in a bead mill (cell volume: 200 cc, zirconia bead diameter: 0.1 mm, filling ratio: 80%), and the particle size distribution of inorganic particles was adjusted to D50=1.0 $\mu$m. To the dispersion liquid having an adjusted particle size distribution, 4.6 parts by weight (in terms of solid content) of acryl latex (solid content concentration: 40%, average particle diameter: 145 nm, lowest film-deposition temperature: 0°C or less, constituent monomers: butyl acrylate, 2-ethylhexyl acrylate, methacrylic acid) was added as an insoluble ionic binder to thereby prepare Coating Material A.

Coating Material D:

97.0 parts by weight of aluminum hydroxide oxide (average particle diameter: 1.4 $\mu$m) as an inorganic particle and 3.0 parts by weight (in terms of solid content) of an aqueous ammonium polycarboxylate solution (SN Dispersant 5468, produced by San Nopco, Ltd., solid content concentration: 40%) as an ionic dispersant were uniformly dispersed in 100 parts by weight of water to prepare a dispersion liquid. The obtained dispersion liquid was subjected to a disintegration treatment in a bead mill (cell volume: 200 cc, zirconia bead diameter: 0.1 mm, filling ratio: 80%), and the particle size distribution of inorganic particles was adjusted to D50=1.0 $\mu$m to thereby prepare Coating Material D.

Coating Material E:

91.0 parts by weight of aluminum hydroxide oxide (average particle diameter: 1.4 $\mu$m) as an inorganic particle and 1.0 parts by weight (in terms of solid content) of an aqueous aliphatic polyether solution (E-D057, produced by San Nopco, Ltd., solid content concentration: 40%) as a nonionic dispersant were uniformly dispersed in 100 parts by weight of water to prepare a dispersion liquid. The obtained dispersion liquid was subjected to a disintegration treatment in a bead mill (cell volume: 200 cc, zirconia bead diameter: 0.1 mm, filling ratio: 80%), and the particle size distribution of inorganic particles was adjusted to D50=1.0 $\mu$m. To the dispersion liquid having an adjusted particle size distribution, 5.0 parts by weight (in terms of solid content) of acryl latex (solid content concentration: 40%, average particle diameter:

145 nm, lowest film-deposition temperature: 0°C or less, constituent monomers: butyl acrylate, 2-ethylhexyl acrylate, methacrylic acid) as an insoluble ionic binder and 3.0% parts by weight of hydroxyethyl cellulose (SP-200, produced by Daicel Corporation) as a nonionic flow modifier were added to thereby prepare Coating Material E.

Coating Material F:

78.0 parts by weight of aluminum hydroxide oxide (average particle diameter: 1.4 μm) as an inorganic particle, 0.4 parts by weight (in terms of solid content) of an aqueous ammonium polycarboxylate solution (SN Dispersant 5468, produced by San Nopco, Ltd., solid content concentration: 40%) as a nonionic dispersant, and 0.6 parts by weight (in terms of solid content) of an aqueous aliphatic polyether solution (E-D057, produced by San Nopco, Ltd., solid content concentration: 40%, static surface tension: 35 mN/m (0.1 weight% aqueous solution, 25°C)) as a surface tension adjusting agent were uniformly dispersed in 100 parts by weight of water to prepare a dispersion liquid. The obtained dispersion liquid was subjected to a disintegration treatment in a bead mill (cell volume: 200 cc, zirconia bead diameter: 0.1 mm, filling ratio: 80%), and the particle size distribution of inorganic particles was adjusted to D50=1.0 μm. To the dispersion liquid having an adjusted particle size distribution, 4.0 parts by weight (in terms of solid content) of acryl latex (solid content concentration: 40%, average particle diameter: 145 nm, lowest film-deposition temperature: 0°C or less, constituent monomers: butyl acrylate, 2-ethylhexyl acrylate, methacrylic acid) as an insoluble ionic binder and 17.0 parts by weight (in terms of solid content) of acryl latex (solid content concentration: 23%, average particle diameter: 450 nm, glass transition temperature: 55°C, constituent monomers: cyclohexyl methacrylate, butyl acrylate, 2-ethylhexyl acrylate) as an organic particle were added to thereby prepare Coating Material F.

Coating Material G:

92.0 parts by weight of barium sulfate (average particle diameter: 2 μm, primary particle diameter: 1.0 μm, degree of surface hydrophilicity: 0.84) as an inorganic particle and 0.4 parts by weight (in terms of solid content) of an aqueous ammonium polycarboxylate solution (SN Dispersant 468, produced by San Nopco, Ltd., solid content concentration: 40%) as an ionic dispersant were uniformly dispersed in 100 parts by weight of water to prepare a dispersion liquid. The obtained dispersion liquid was subjected to a disintegration treatment in a bead mill (cell volume: 200 cc, zirconia bead diameter: 0.1 mm, filling ratio: 80%), and the particle size distribution of inorganic particles was adjusted to D50=1.0 μm. To the dispersion liquid having an adjusted particle size distribution, 7.6 parts by weight (in terms of solid content) of acryl latex (solid content concentration: 40%, average particle diameter: 145 nm, lowest film-deposition temperature: 0°C or less, constituent monomers: butyl acrylate, 2-ethylhexyl acrylate, methacrylic acid) was added as an insoluble ionic binder to thereby prepare Coating Material G.

Coating Material H:

The coating material was produced in the same manner as Coating Material G except that the barium sulfate used was changed to barium sulfate having an average particle diameter of 500 nm, a primary particle diameter of 300 nm, and a degree of surface hydrophilicity of 0.84 and the particle size distribution after disintegration was changed to D50=300 nm.

[Examples 1 to 11, Comparative Examples 1 to 8, Membrane Breakage Example]

Separators were fabricated according to the base material, coating material, coating method, layer configuration, separator production method, etc. shown in Tables 1 to 3, and measurements or evaluations of the above-described physical properties or cell characteristics were carried out. The measurement/evaluation results are also shown in Tables 1 to 3.

[Application of Coating Material to Porous Layer Base Material]

The porous layer base material was fed by a feeding machine, and the surface thereof was consecutively subjected to a corona discharge treatment. The coating material was applied using a gravure reverse coater and subsequently dried by a dryer at 60°C to remove water, and the obtained separator was wound up. In the case of double-side coating, the multilayer separator was fabricated by applying the coating material also to the back surface in the same manner.

[Transfer of Example 3]

Coating Material F was applied to a surface-treated PET film (TOYOBO ESTER E5100, produced by TOYOBO CO., LTD.) by using a gravure reverse coater. Subsequently, the coating layer was dried by a dryer at 60°C to remove water, and the resulting film was wound up. Furthermore, the coating layer above and Porous Membrane A-1 were fed and after the coating layer and Porous Film A-1 were stacked together using heated rolls at 40°C, the PET film was peeled off to thereby transfer the coating layer onto the surface of Porous Film A-1. In this way, a multilayer separator was obtained.

[Table 1]

| | | Comparative Example 1 | Example 3 | Comparative Example 3 | Comparative Example 2 | Example 1 | Example 2 |
|---|---|---|---|---|---|---|---|
| Base material | Common form | A-1 | A-1 | A-1 | A-1 | A-3 | A-1 |
| Coating | Common form | E | F | F | A | - | D |
| Layer configuration | | B/A/B | A/B | A/B | B/A/B | A/B/A | B/A/B |
| Production method | | coating | transfer (hydrophilic) | coating | coating | coextrusion lamination | coating |
| Inorganic particle | Primary particle diameter | 1.0 $\mu$m | 1.0 $\mu$m | 1.0 $\mu$m | 1.0 $\mu$m | 40 nm | 1.0 $\mu$m |
| Inorganic particle | Degree of surface hydrophilicity, - | 0.98 | 0.98 | 0.98 | 0.98 | 0.62 | 0.98 |
| Inorganic particle | Content ratio, weight% | 92 | 79 | 79 | 95 | 90 | 100 |
| NMR | r(AB) (%)@100 ms | 40.2 | 48.9 | 26 | 44.2 | 52 | 62 |
| | s(AB) (%/ms) 100 ms to 20 ms | 0.19 | 0.30 | 0.07 | 0.24 | 0.33 | 0.46 |
| | D(A) | 2.8E-11 | 2.8E-11 | 2.8E-11 | 2.8E-11 | 3.2E-11 | 2.8E-11 |
| | D(B) | 4.0E-11 | 3.2E-11 | 4.0E-11 | 9.8E-11 | 1.8E-10 | 1.2E-10 |
| | r(AB)/D(B) | 1.0E+ 12 | 1.5E+12 | 6.5E+11 | 4.5E+11 | 2.9E+11 | 5.2E+11 |
| | s(AB)/D(B) | 4.8E+09 | 9.4E+09 | 1.7E+09 | 2.4E+09 | 1.8E+09 | 3.9E+09 |
| Thickness | Porous layer A, $\mu$m | 9 | 9 | 9 | 9 | 3+3 | 9 |
| | Porous layer B, $\mu$m | 3+3 | 5 | 5 | 3+3 | 8 | 3 |
| Air permeability | sec./100 ml | 302 | 172 | 177 | 182 | 98 | 156 |
| Puncture strength | gf | 320 | 320 | 320 | 320 | 300 | 320 |
| Peel strength | N/m | 240 | 160 | 200 | 38 | 120 | 14 |

EP 3 806 192 A1

(continued)

| Battery evaluation | high-rate cycle | Comparative Example 1 | Example 3 | Comparative Example 3 | Comparative Example 2 | Example 1 | Example 2 |
|---|---|---|---|---|---|---|---|
| | | C(63%) | C(70%) | D(44%) | C(68%) | B(72%) | B(78%) |

[Table 2]

| | | Example 4 | Example 5 | Example 6 | Example 7 | Example 8 | Example 9 | Example 10 | Example 11 |
|---|---|---|---|---|---|---|---|---|---|
| Base material | Common form | A-4 | A-5 | A-6 | A-7 | A-8 | A-9 | A-10 | A-11 |
| Coating | Common form | - | - | - | - | - | - | - | - |
| Layer configuration | | A/B/A | A/B/A | A/B/A | A/B/A | A/B/A | A/B/A | A/B/A | B/A/B |
| Production method | | coextrusion lamination | coextrusion lamination | coextrusion lamination | coextrusion lamination | coextrusion lamination | coextrusion lamination | coextrusion lamination | coextrusion lamination |
| Inorganic particle | Primary particle diameter | 90 nm | 200 nm | 200 nm | 200 nm | 700 nm | 700 nm | 2.4 $\mu$m | 1.4 $\mu$m |
| Inorganic particle | Degree of surface hydrophilicity, - | 0.68 | 0.6 | 0.6 | 0.78 | 0.68 | 0.52 | 0.84 | 0.74 |
| Inorganic particle | Content ratio, weight% | 95 | 97 | 70 | 97 | 95 | 70 | 95 | 95 |
| NMR | r(AB)(%)@100 ms | 80 | 83 | 55 | 75 | 81 | 58 | 80 | 80 |
| | s(AB) (%/ms) 100 ms to 20 ms | 0.68 | 0.71 | 0.40 | 0.55 | 0.70 | 0.43 | 0.65 | 0.70 |
| | D(A) | 7.0E-11 | 7.0E-11 | 7.0E-11 | 7.0E-11 | 7.0E-11 | 7.0E-11 | 7.0E-11 | 7.0E-11 |
| | D(B) | 1.8E-10 | 2.0E-10 | 1.1E-10 | 2.2E-10 | 2.2E-10 | 1.4E-10 | 1.2E-10 | 1.7E-10 |
| | r(AB)/D(B) | 4.4E+11 | 4.2E+11 | 5.0E+11 | 3.4E+11 | 3.7E+11 | 4.1E+11 | 6.7E+11 | 4.7E+11 |
| | s(AB)/D(B) | 3.8E+09 | 3.6E+09 | 3.6E+09 | 2.5E+09 | 3.2E+09 | 3.1E+09 | 5.4E+09 | 4.1E+09 |
| Thickness | Porous layer A, $\mu$m | 3+3 | 3+3 | 3+3 | 3+3 | 3+3 | 3+3 | 3+3 | 6 |
| | Porous layer B, $\mu$m | 10 | 10 | 8 | 10 | 10 | 8 | 10 | 5+5 |
| Air permeability | sec./100 ml | 90 | 82 | 88 | 86 | 80 | 88 | 77 | 80 |

EP 3 806 192 A1

26

(continued)

|  |  | Example 4 | Example 5 | Example 6 | Example 7 | Example 8 | Example 9 | Example 10 | Example 11 |
|---|---|---|---|---|---|---|---|---|---|
| Puncture strength | g f | 300 | 300 | 320 | 300 | 300 | 320 | 260 | 300 |
| Peel strength | N/m | 120 | 120 | 150 | 110 | 120 | 160 | 100 | 110 |
| Battery evaluation | high-rate cycle | A(92%) | A(92%) | B(76%) | A(90%) | A(92%) | B(78%) | A(86%) | A(90%) |

[Table 3]

| | | Comparative Example 4 | Comparative Example 5 | Comparative Example 6 | Membrane Breakage Example | Comparative Example 7 | Comparative Example 8 |
|---|---|---|---|---|---|---|---|
| Base material | Common form | A-12 | A-13 | A-14 | A-15 | A-1 | A-1 |
| Coating | Common form | - | - | - | - | G | H |
| Layer configuration | | B/A/B | A/B/A | A/B/A | A/B/A | A/B | A/B |
| Production method | | coextrusion lamination | coextrusion lamination | coextrusion lamination | coextrusion lamination | coating | coating |
| Inorganic particle | Primary particle diameter | 15 nm | 16nm | 1.4 μm | 3.5 μm | 1.0 μm | 300 nm |
| Inorganic particle | Degree of surface hydrophilicity, - | 0.03 | 0.26 | 0.2 | 0.98 | 0.84 | 0.84 |
| Inorganic particle | Content ratio, weight% | 60 | 98 | 95 | 95 | 92 | 92 |

(continued)

| | | Comparative Example 4 | Comparative Example 5 | Comparative Example 6 | Membrane Breakage Example | Comparative Example 7 | Comparative Example 8 |
|---|---|---|---|---|---|---|---|
| NMR | r(AB) (%)@100 ms | 35 | 40 | 38 | | 30 | 30 |
| | s(AB) (%/ms) 100 ms to 20 ms | 0.16 | 0.20 | 0.18 | | 0.15 | 0.11 |
| | D(A) | 4.0E-11 | 2.8E-11 | 7.0E-11 | | 2.8E-11 | 2.8E-11 |
| | D(B) | 7.7E-11 | 8.2E-11 | 4.0E-11 | | 4.0E-11 | 3.8E-11 |
| | r(AB)/D(B) | 4.5E+ 11 | 4.9E+ 11 | 9.5E+ 11 | | 7.5E+ 11 | 7.9E+ 11 |
| | s(AB)/D(B) | 2.1E+09 | 2.4E+09 | 4.5E+09 | | 3.8E+09 | 2.9E+09 |
| Thickness | Porous layer A, $\mu$m | 14 | 2+2 | 3+3 | membrane breakage occurred during stretching | 9 | 9 |
| | Porous layer B, $\mu$m | 2+2 | 10 | 7 | | 4 | 4 |
| Air permeability | sec./100 ml | 170 | 176 | 180 | | 189 | 200 |
| Puncture strength | gf | 400 | 278 | 320 | | 320 | 320 |
| Peel strength | N/m | 180 | 150 | 180 | | 210 | 220 |
| Battery evaluation | high-rate cycle | D(42%) | D(55%) | C(63%) | | D(44%) | D(40%) |

REFERENCE SIGNS LIST

1    Diffusion behavior of fluoride ion impregnated into porous layer A
2    Diffusion behavior of fluoride ion impregnated into porous layer B
3    Diffusion behavior of fluoride ion moved from porous layer A to porous layer B
4    Diffusion behavior of fluoride ion moved from porous layer B to porous layer A

**Claims**

1. A multilayer separator for an electricity storage device, comprising a porous layer A containing a polyolefin resin and a porous layer B containing an inorganic particle, wherein
   in the fluoride ion exchange NMR measurement of the multilayer separator for an electricity storage device, denoting as r(AB) the ion permeation rate (%) between the porous layer A and the porous layer B with a mixing time of 100 ms, the r(AB) satisfies the following relational expression:

$$r(AB) \geq 45 \quad .$$

2. The multilayer separator for an electricity storage device according to claim 1, wherein the r(AB) satisfies the following relational expression:

$$r(AB) > 50 \quad .$$

3. The multilayer separator for an electricity storage device according to claim 1 or 2, wherein the primary particle diameter of the inorganic particle is 50 nm or more and 3 $\mu$m or less.

4. The multilayer separator for an electricity storage device according to any one of claims 1 to 3, wherein the degree of surface hydrophilicity of the inorganic particle is 0.30 or more and 0.80 or less.

5. The multilayer separator for an electricity storage device according to any one of claims 1 to 4, wherein the porous layer B contains 70 weight% or more and 100 weight% or less of the inorganic particle.

6. The multilayer separator for an electricity storage device according to any one of claims 1 to 5, wherein the multilayer separator for an electricity storage device satisfies the following relational expression:

$$\text{total thickness of porous layer A} < \text{total thickness of porous layer B}.$$

7. The multilayer separator for an electricity storage device according to any one of claims 1 to 6, wherein in the pulsed field gradient NMR measurement for fluoride ion of the multilayer separator for an electricity storage device, denoting as D(B) the ion diffusion coefficient of the porous layer B, D(B) satisfies the following relational expression:

$$D(B) > 1.0 \times 10^{-10} \quad .$$

8. The multilayer separator for an electricity storage device according to any one of claims 1 to 7, wherein in the pulsed field gradient NMR measurement for fluoride ion of the multilayer separator for an electricity storage device, denoting as D(A) the ion diffusion coefficient of the porous layer A, D(A) satisfies the following relational expression:

$$D(A) < 1.0 \times 10^{-10} \quad .$$

9. The multilayer separator for an electricity storage device according to any one of claims 1 to 8, wherein the porous layer A and the porous layer B have a peel strength of 20 N/m or more and 1,000 N/m or less.

10. The multilayer separator for an electricity storage device according to any one of claims 1 to 9, wherein the porous layer A and the porous layer B are coextruded.

11. The multilayer separator for an electricity storage device according to claim 10, wherein the multilayer separator for an electricity storage device is obtained by stacking the porous layer A and the porous layer B each in a non-porous state in the presence of a liquid and then making the stack porous.

12. The multilayer separator for an electricity storage device according to any one of claims 1 to 9, wherein the porous layer B does not contain a binder component.

13. The multilayer separator for an electricity storage device according to any one of claims 1 to 9, wherein the surface of the inorganic particle is bonded to a polymer or a dispersant.

14. The multilayer separator for an electricity storage device according to any one of claims 1 to 13, wherein the r(AB) satisfies the following relational expression:

$$r(AB) \leq 100.$$

15. The multilayer separator for an electricity storage device according to any one of claims 1 to 14, wherein the D(B) satisfies the following relational expression:

$$D(B) \leq 1.0 \times 10^{-9} \quad .$$

16. The multilayer separator for an electricity storage device according to any one of claims 1 to 15, wherein the D(A) satisfies the following relational expression:

$$D(A) \geq 1.0 \times 10^{-11} \quad .$$

17. The multilayer separator for an electricity storage device according to any one of claims 1 to 16, wherein in the fluoride ion exchange NMR measurement of the multilayer separator for an electricity storage device, when the value S calculated according to the following formula is defined as the ion permeability index S(AB):

$$S\,(\%/ms) = \{(\text{ion permeation rate } r(AB) \text{ with } 100 \text{ ms mixing time}) - (\text{ion permeation rate } r(AB) \text{ with } 20 \text{ ms mixing time})\}/(100-20)$$

the S(AB) satisfies the following relational expression:

$$S(AB) > 0.25 \quad .$$

18. The multilayer separator for an electricity storage device according to claim 17, wherein S(AB) satisfies the following relational expression:

$$S(AB) > 0.35 \quad .$$

19. The multilayer separator for an electricity storage device according to claim 17 or 18, wherein S(AB) satisfies the following relational expression:

$$S(AB) \leq 1.00 \quad .$$

**20.** A multilayer separator for an electricity storage device, comprising a porous layer A containing a polyolefin resin and a porous layer B containing an inorganic particle, wherein
in the fluoride ion exchange NMR measurement of the multilayer separator for an electricity storage device, when the value S calculated according to the following formula is defined as the ion permeability index S(AB):

$$S \ (\%/ms) = \{(\text{ion permeation rate r(AB) with 100 ms mixing time}) - (\text{ion permeation rate r(AB) with 20 ms mixing time})\}/(100-20)$$

the S(AB) satisfies the following relational expression:

$$S(AB) > 0.25 \quad .$$

**21.** The multilayer separator for an electricity storage device according to claim 20, wherein S(AB) satisfies the following relational expression:

$$S(AB) > 0.35 \quad .$$

**22.** The multilayer separator for an electricity storage device according to claim 20 or 21, wherein S(AB) satisfies the following relational expression:

$$S(AB) \leq 1.00 \quad .$$

# FIG. 1

POROUS LAYER B

POROUS LAYER A

# FIG. 2

mixing time 100ms

mixing time 20ms

(a)

(b)

EP 3 806 192 A1

# FIG. 3

SLICE DATA

AREA OF DIAGONAL PEAK
(FLUORIDE ION IMPREGNATED
INTO POROUS LAYER A)

AREA OF CROSS PEAK
(FLUORIDE ION MOVED FROM
POROUS LAYER A
TO POROUS LAYER B)

PPM

-72.5　　-75.0　　-77.5　　-80.0　　-82.5　　-85.0　　-87.5

## INTERNATIONAL SEARCH REPORT

| International application No. |
| --- |
| PCT/JP2019/018141 |

### A. CLASSIFICATION OF SUBJECT MATTER
Int. Cl. H01M2/16(2006.01)i, H01G11/52(2013.01)i

According to International Patent Classification (IPC) or to both national classification and IPC

### B. FIELDS SEARCHED

Minimum documentation searched (classification system followed by classification symbols)
Int. Cl. H01M2/16, H01G11/52

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2014-003025 A (ASAHI KASEI E-MATERIALS CORP.) 09 January 2014, claims, paragraphs [0027]-[0029], | 1-3, 5-11, 13-22 |
| Y | [0042], [0054], [0055], examples & US 2012/0015229 A1, claims, paragraphs [0082]-[0084], [0105]-[0109], [0123]-[0126], examples & EP 2408043 A1 & KR 10-2011-0114720 A & CN 102349177 A | 4 |
| Y | JP 2009-185093 A (ASAHI KASEI E-MATERIALS CORP.) 20 August 2009, claims, paragraphs [0020], [0027] (Family: none) | 4 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28.06.2019 | 09.07.2019 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
| --- |
| PCT/JP2019/018141 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y | JP 2017-001402 A (SUMITOMO CHEMICAL CO., LTD.) 05 January 2017, claims, paragraphs [0014]-[0035], examples & US 2014/0302389 A1, claims, paragraphs [0037]-[0080] & CN 103946023 A & KR 10-2014-0102650 A | 1-3, 5-8, 12-22<br>4 |
| A | US 2016/0172645 A1 (INDUSTRIAL TECHNOLOGY RESEARCH INSTITUTE) 16 June 2016, whole document & CN 105702902 A | 1-22 |
| A | JP 2017-080977 A (ASAHI KASEI CORP.) 18 May 2017, entire text (Family: none) | 1-22 |
| A | WO 2017/010480 A1 (MITSUBISHI PLASTICS, INC.) 19 January 2017, entire text & US 2018/0294459 A1, whole document & KR 10-2018-0030666 A & CN 108025539 A | 1-22 |
| A | WO 2017/073781 A1 (UBE INDUSTRIES, LTD.) 04 May 2017, entire text & US 2018/0294455 A1, whole document & CN 108137842 A | 1-22 |
| A | JP 2016-203621 A (MITSUBISHI PLASTICS, INC.) 08 December 2016, entire text & US 2018/0083247 A1, whole document | 1-22 |
| A | JP 2015-141814 A (SANYO ELECTRIC CO., LTD.) 03 August 2015, entire text (Family: none) | 1-22 |

Form PCT/ISA/210 (continuation of second sheet) (January 2015)

**EP 3 806 192 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016076337 A
- JP 2011100602 A
- WO 2012005152 A
- JP 2013046998 A